# FASCICULE DE BREVET EUROPEEN

(11) **EP 2 654 947 B1**
(45) Date de publication et mention de la délivrance du brevet: **21.08.2019**
(21) Numéro de dépôt: 11808895.4
(22) Date de dépôt: 15.12.2011
(51) Int. Cl.: B01J 21/12, B01J 23/24, B01J 23/882, B01J 23/883, B01J 27/188, B01J 37/00, B01J 35/10, C10G 45/04, C10G 45/12, C10G 3/00, B01J 29/40, B01J 29/70, B01J 29/08

(54) **PROCEDE DE PREPARATION D'UN MATERIAU SPHERIQUE A POROSITE HIERARCHISEE COMPRENANT DES PARTICULES METALLIQUES PIEGEES DANS UNE MATRICE MESOSTRUCTUREE**
HERSTELLUNGSVERFAHREN EINES SPHAERISCHEN UND AMORPHEN MATERIALS ENTHALTEND METALLISCHE TEILCHEN IN EINER MESOSTRUKTURIERTEN MATRIX UND MIT HIERARCHISIERTER POROSITÄT
PREPARATION PROCESS OF A SPHERICAL AND AMORPHOUS MATERIAL COMPRISING METALLIC PARTICLES WITHIN A MESOSTRUCTURED MATRIX AND HAVING A HIERARCHISED POROSITY

(30) Priorité: 22.12.2010 FR 1005031
(43) Date de publication de la demande: 30.10.2013
(73) Titulaire: IFP Energies nouvelles, 92500 Rueil-Malmaison (FR); Université Pierre et Marie Curie, 75252 Paris Cedex 05 (FR); Centre National de la Recherche Scientifique, 75794 Paris Cedex 16 (FR)
(72) Inventeur: CHAUMONNOT, Alexandra, F-69008 Lyon (FR); SANCHEZ, Clément, F-91440 Bures-sur-Yvette (FR); BOISSIERE, Cédric, F-75013 Paris (FR); COLBEAU-JUSTIN, Frédéric, F-94200 Ivry-sur-Seine (FR); BONDUELLE, Audrey, F-69340 Francheville (FR)
(74) Mandataire: IFP Energies nouvelles
(86) Numéro de dépôt international: PCT/FR2011/000655
(87) Numéro de publication internationale: WO 2012/085356

(56) Documents cités:
- EP-A1- 1 393 802
- EP-A1- 1 892 038
- WO-A1-2006/128988
- WO-A1-2009/130401
- WO-A1-2009/144413
- WO-A1-2009/144414
- WO-A1-2010/020714
- WO-A2-2009/060143
- WO-A2-2009/060144
- WO-A2-2009/144411

## Description

La présente invention se rapporte au domaine des matériaux oxydes inorganiques contenant des métaux de transition et du silicium, notamment des matériaux métallosilicates et plus précisément des matériaux aluminosilicates, présentant une porosité hiérarchisée dans les domaines de la microporosité et de la mésoporosité et organisée au moins dans le domaine de la mésoporosité. Elle concerne plus précisément la préparation de ces matériaux qui sont obtenus par l'emploi de la technique de synthèse dite "aérosol". La présente invention se rapporte également à l'utilisation de ces matériaux après sulfuration comme catalyseurs dans divers procédés de transformation de charges hydrocarbonées se rapportant particulièrement aux domaines de l'hydrotraitement et de l'hydroconversion.

### État de la technique antérieure

La composition et l'utilisation des catalyseurs d'hydroconversion (HDC) et d'hydrotraitement (HDT) de charges hydrocarbonées sont respectivement décrites dans l'ouvrage "Hydrocracking Science and Technology", 1996, J. Scherzer, A. J. Gruia, Marcel Dekker Inc et dans l'article de B. S Clausen, H. T. Topsøe, F. E. Massoth, issu de l'ouvrage "Catalysis Science and Technology", 1996, volume 11, Springer-Verlag. Ainsi, ces catalyseurs se caractérisent généralement par une fonction hydro-déshydrogénante apportée par la présence d'une phase active à base d'au moins un métal du groupe VIB et/ou au moins un métal du groupe VB et éventuellement au moins un métal du groupe VIII du tableau périodique des éléments. Les formulations les plus courantes sont de type cobalt-molybdène (CoMo), nickel-molybdène (NiMo) et nickel-tungstène (NiW). Ces catalyseurs peuvent se présenter sous forme massique ou bien à l'état supporté mettant alors en jeu un solide poreux. Après préparation, au moins un métal du groupe VIB et/ou au moins un métal du groupe VB et éventuellement au moins un métal du groupe VIII présent(s) dans la composition catalytique desdits catalyseurs se présente(nt) souvent sous forme d'oxyde. La forme active et stable pour les procédés d'HDC et d'HDT étant la forme sulfurée, ces catalyseurs sont soumis à une étape de sulfuration.

Il est généralement connu de l'Homme du métier que de bonnes performances catalytiques dans les domaines d'application mentionnés ci-dessus sont fonction 1) de la nature de la charge hydrocarbonée à traiter, 2) du procédé employé, 3) des conditions opératoires de fonctionnement choisies et 4) du catalyseur utilisé. Dans ce dernier cas, il est également admis qu'un catalyseur présentant un fort potentiel catalytique se caractérise 1) par une fonction hydro-déshydrogénante optimisée (phase active associée parfaitement dispersée à la surface du support et présentant une teneur en métal élevée) et 2) dans le cas particulier des procédés mettant en jeu des réactions d'hydroconversion (HDC), par un bon équilibre entre ladite fonction hydro-déshydrogénante et la fonction craquante amenée par la fonction acide d'un support. On recherche également généralement à ce que, quelle que soit la nature de la charge hydrocarbonée à traiter, le catalyseur présente une accessibilité satisfaisante des sites actifs vis-à-vis des réactifs et produits de réactions tout en développant une surface active élevée, ce qui conduit à des contraintes spécifiques en terme de structure et de texture propres au support oxyde présent dans lesdits catalyseurs. Ce dernier point est tout particulièrement critique dans le cas du traitement de charges hydrocarbonées dites "lourdes".

Les méthodes usuelles conduisant à la formation de la phase hydro-déshydrogénante des catalyseurs d'HDC et d'HDT consistent en un dépôt de précurseur(s) moléculaire(s) d'au moins un métal du groupe VIB et/ou au moins un métal du groupe VB et éventuellement au moins un métal du groupe VIII sur un support oxyde par la technique dite "d'imprégnation à sec" suivi des étapes de maturation, séchage et calcination conduisant à la formation de la forme oxydée du(des)dit(s) métal(aux) employé(s). On procède ensuite à l'étape finale de sulfuration génératrice de la phase active hydro-déshydrogénante comme mentionné ci-dessus.

Les performances catalytiques de catalyseurs issus de ces protocoles de synthèse conventionnels ont largement été étudiées. En particulier, il a été montré que, pour des teneurs en métal relativement élevées, des phases réfractaires à la sulfuration formées consécutivement à l'étape de calcination (phénomène de frittage) apparaissent (B. S. Clausen, H. T. Topsøe, et F. E. Massoth, issu de l'ouvrage "Catalysis Science and Technology", 1996, volume 11, Springer-Verlag). Par exemple, dans le cas des catalyseurs de type CoMo ou NiMo supporté sur un support de nature aluminique, il s'agit 1) de cristallites de MoO₃, NiO, CoO, CoMoO₄ ou Co₃O₄, de taille suffisante pour être détectés en DRX, et/ou 2) des espèces du type Al₂(MoO₄)₃, COAl₂O₄ ou NiAl₂O₄. Les trois espèces précitées contenant l'élément aluminium sont bien connues de l'Homme du métier. Elles résultent de l'interaction entre le support aluminique et les sels précurseurs en solution de la phase active hydro-déshydrogénante, ce qui se traduit concrètement par une réaction entre des ions Al³⁺ extraits de la matrice aluminique et lesdits sels pour former des hétéropolyanions d'Anderson de formule [Al(OH)₆Mo₆O₁₈]³⁻, eux-mêmes précurseurs des phases réfractaires à la sulfuration. La présence de l'ensemble de ces espèces conduit à une perte indirecte non négligeable de l'activité catalytique du catalyseur associé car la totalité des éléments appartenant au moins à un métal du groupe VIB et/ou au moins un métal du groupe VB et éventuellement au moins un métal du groupe VIII n'est pas utilisée au maximum de son potentiel puisque une partie de ceux-ci est immobilisée dans des espèces peu ou non actives.

Les performances catalytiques des catalyseurs conventionnels décrits ci-dessus pourraient donc être améliorées, notamment en développant de nouvelles méthodes de préparation de ces catalyseurs qui permettraient :
1) d'assurer une bonne dispersion de la phase hydro-déshydrogénante, en particulier pour des teneurs en métal élevées (par exemple par contrôle de la taille des particules à base de métaux de transition, maintien des propriétés de ces particules après traitement thermique, etc.),
2) de limiter la formation des espèces réfractaires à la sulfuration (par exemple par l'obtention d'une meilleure synergie entre les métaux de transition formant la phase active, contrôle des interactions entre la phase active hydro-déshydrogénante (et/ou ses précurseurs) et le support poreux employé, etc.),
3) d'assurer une bonne diffusion des réactifs et des produits des réactions tout en maintenant des surfaces actives développées élevées (optimisation des propriétés chimiques, texturales et structurales du support poreux).

Pour répondre aux besoins exprimés ci-dessus, il a été développé des catalyseurs d'hydroconversion et d'hydrotraitement dont les précurseurs de la phase active hydro-déshydrogénante sont formés d'hétéropolyanions (HPA), par exemple d'hétéropolyanions à base de cobalt et de molybdène (systèmes CoMo), de nickel et de molybdène (systèmes NiMo), de nickel et de tungstène (NiW), de nickel, vanadium et de molybdène (systèmes NiMoV) ou de phosphore et de molybdène (PMo). Par exemple, la demande de brevet FR 2.843.050 divulgue un catalyseur d'hydroraffinage et/ou d'hydroconversion comprenant au moins un élément du groupe VIII et au moins du molybdène et/ou du tungstène présents au moins en partie sous la forme d'hétéropolyanions dans le précurseur oxyde. De manière générale, les hétéropolyanions sont imprégnés sur un support oxyde.

Depuis une dizaine d'années, d'autres catalyseurs dont les supports présentent une porosité hiérarchisée et contrôlée ont été développés. Dans le cadre des applications se rapportant aux domaines de l'hydrotraitement, de l'hydroconversion et de la production de charges hydrocarbonées, au delà du compromis accessibilité (liée à la taille des pores)/surface active développée (liée à la surface spécifique) qu'il est bon de maîtriser, il est important de contrôler des paramètres comme la longueur des pores, la tortuosité ou encore la connexité entre les pores (définie par le nombre d'accès de chaque cavité). Les propriétés structurales liées à un agencement périodique et à une morphologie particulière des pores sont des paramètres essentiels à maîtriser. Par exemple, le brevet US 2007/152181 enseigne qu'il est avantageux d'utiliser pour la transformation de coupes pétrolières variées des supports de catalyseurs de type alumine mésotructurée développant une grande surface spécifique et une distribution homogène de taille de pores. Les demandes WO 2009/144413 et WO 2009/144414 décrivent, quant à eux, des catalyseurs obtenus par le mélange respectivement d'un matériau comprenant du silicium à porosité hiérarchisée et organisée, respectivement amorphe et cristallisé, et d'une phase active contenant au moins un élément hydro-déshydrogénant du groupe VIB et /ou du groupe VIII, ces catalyseurs étant notamment mis en oeuvre dans des procédés d'hydrocraquage, d'hydroconversion et d'hydrotraitement.

### Résumé de l'invention

La présente invention a pour objet un procédé de préparation d'un matériau inorganique à porosité hiérarchisée dans les domaines de la microporosité et de la mésoporosité, ledit matériau étant constitué d'au moins deux particules sphériques élémentaires ayant un diamètre maximal de 200 microns, chacune desdites particules sphériques comprenant des particules métalliques présentant une taille moyenne supérieure ou égale à 0,6 nm et strictement inférieure à 1 nm, contenant au moins un ou plusieurs métaux choisis parmi le vanadium, le niobium, le tantale, le molybdène, le tungstène, le fer, le cuivre, le zinc, le cobalt et le nickel, lesdites particules métalliques étant piégées de façon homogène et uniforme au sein d'une matrice, mésostructurée, à base d'oxyde de silicium, présentant des parois microporeuses d'épaisseur comprise entre 1 et 60 nm, ladite matrice étant constituée soit intégralement d'entités proto-zéolithiques, soit intégralement d'entités zéolithiques, soit d'un mélange d'entités proto-zéolithiques et d'entités zéolithiques, ledit procédé comprenant au moins les étapes suivantes :
a) la préparation d'une solution contenant des nanocristaux zéolithiques de taille nanométrique maximale égale à 60 nm à base de silicium et/ou des éléments précurseurs d'entités proto-zéolithiques à base de silicium,
b) le mélange en solution desdites particules métalliques ou d'au moins un précurseur métallique desdites particules métalliques, d'au moins un tensioactif et d'au moins ladite solution obtenue selon a) tel que le rapport des volumes de matières inorganiques et organiques V_{inorganique}/V_{organique} est compris entre 0,29 et 0,50,
c) l'atomisation par aérosol de ladite solution obtenue à l'étape b) pour conduire à la formation de gouttelettes sphériques,
d) le séchage desdites particules,
g) l'élimination d'au moins dudit agent structurant et d'au moins dudit tensioactif,
h) la régénération desdites particules métalliques sous forme de polyoxométallate éventuellement décomposées au cours de l'étape g) par lavage du solide issu de ladite étape g) avec un solvant polaire pendant une durée de 1 à 24 heures,
i) une étape de séchage réalisée à une température comprise entre 40 et 100°C pendant une durée comprise entre 12 et 48 heures,
dans lequel lesdites particules métalliques se présentent sous la forme de polyoxométallate de formule (XₓMₘO_{y}Hₕ)^{q-} où H est l'atome d'hydrogène, O est l'atome d'oxygène, X est un élément choisi parmi le phosphore, le silicium, le bore, le nickel et le cobalt et M est un ou plusieurs éléments choisis parmi le vanadium, le niobium, le tantale, le molybdène, le tungstène, le fer, le cuivre, le zinc, le cobalt et le nickel, x étant égal à 0, 1, 2, ou 4, m étant égal à 5, 6, 7, 8, 9, 10, 11, 12 et 18, y étant compris entre 17 et 72, h étant compris entre 0 et 12 et q étant compris entre 1 et 20 (y, h et q étant des nombres entiers).

Ledit procédé de préparation selon l'invention comportant lesdites étapes a), b), c), d), g), h) et i) est appelé procédé principal selon l'invention. Le matériau inorganique préparé selon le procédé principal selon l'invention est un matériau mésostructuré entièrement amorphe, partiellement cristallisé (mixte amorphe/cristallisé) ou entièrement cristallisé.

Selon un premier mode de réalisation préférée du procédé de préparation selon l'invention, on procède à la suite de ladite étape d) à une étape e) consistant à pratiquer l'autoclavage des particules issues de ladite étape d) puis on procède à une étape f) consistant à pratiquer le séchage desdites particules obtenues à l'issue de ladite e). Ladite étape f) est ensuite suivie de la mise en oeuvre de ladite étape g) d'élimination d'au moins dudit agent structurant et d'au moins dudit tensioactif. Ledit premier mode de réalisation du procédé de l'invention comportant lesdites étapes a), b), c), d),e), f), g), h) et i) est appelé procédé secondaire selon l'invention. Le matériau inorganique préparé selon le procédé secondaire selon l'invention est un matériau mésostructuré entièrement cristallisé.

On parlera du procédé selon l'invention pour désigner indifféremment le procédé principal selon l'invention, le procédé secondaire selon l'invention et les différents modes de réalisation du procédé décrits plus loin dans la présente description.

Conformément à l'invention, la matrice à base d'oxyde de silicium formant chacune des particules sphériques élémentaires du matériau préparé selon le procédé de l'invention est donc constituée soit intégralement d'entités proto-zéolithiques (parois amorphes), soit intégralement d'entités zéolithiques (parois cristallisées), soit d'un mélange d'entités proto-zéolithiques et d'entités zéolithiques (parois partiellement cristallisées). En particulier, l'emploi uniquement d'éléments précurseurs d'entités proto-zéolithiques lors de la synthèse de la solution de l'étape a) du procédé principal selon l'invention (absence de toute étape éventuelle d'autoclavage), conduit à des parois de la matrice oxyde mixte microporeuse/mésostructurée à base de silicium totalement amorphes. De même, l'emploi uniquement de nanocristaux de zéolithes de taille nanométrique inférieure ou égale à 60 nm, lors de la synthèse de la solution colloïdale de l'étape a) du procédé principal selon l'invention, conduit à des parois de la matrice oxyde mixte microporeuse/mésostructurée à base de silicium totalement cristallisées. Toujours pour exemple, l'emploi simultané d'éléments précurseurs d'entités proto-zéolithiques et de nanocristaux de zéolithes de taille nanométrique inférieure ou égale à 60 nm, lors de la synthèse de la solution de l'étape a) du procédé principal selon l'invention (absence de toute étape éventuelle d'autoclavage), conduit à des parois de la matrice oxyde mixte microporeuse/mésostructurée à base de silicium partiellement cristallisées. Pour finir, l'emploi simultané d'éléments précurseurs d'entités proto-zéolithiques et de nanocristaux de zéolithes de taille nanométrique inférieure ou égale à 60 nm, lors de la synthèse de la solution de l'étape a) du procédé secondaire selon l'invention (présence d'une étape d'autoclavage), conduit à des parois de la matrice oxyde mixte micro/mésostructurée à base de silicium totalement cristallisées.
Lesdites entités proto-zéolithiques, ou lesdites entités zéolithiques ou encore le mélange d'entités protozéolithiques et d'entités zéolithiques sont à l'origine de la microporosité présente au sein de chacune des particules sphériques du matériau obtenu selon le procédé de l'invention. Ladite matrice à base d'oxyde de silicium formant chacune des particules sphériques élémentaires du matériau préparé selon le procédé de l'invention est soit entièrement silicique soit, elle comprend, outre du silicium, au moins un élément Y choisi parmi l'aluminium, le fer, le bore, l'indium et le gallium, de préférence l'aluminium.

### Intérêt de l'invention

Le procédé de préparation proposé par la présente invention est un procédé simple et fonctionnant en continu. Il permet l'obtention, par voie aérosol, d'un matériau inorganique à porosité hiérarchisée dans les domaines de la microporosité et de la mésoporosité et organisée au moins dans le domaine de la mésoporosité, formé de particules sphériques élémentaires au sein desquelles des particules métalliques sont piégées dans une matrice mixte micro/mésotructuréé à base de silicium.

Le matériau obtenu selon le procédé de préparation selon l'invention est un précurseur catalytique avantageux. Il est avantageusement utilisé, après sulfuration, comme catalyseur dans des applications relatives à l'hydrotraitement et l'hydroconversion de charges hydrocarbonées. En particulier, les particules métalliques sont des espèces précurseurs de la phase active sulfurée présente dans le catalyseur issu du matériau préparé selon le procédé de l'invention.

Le procédé de préparation selon l'invention permet d'obtenir un matériau présentant simultanément les propriétés propres à la présence de particules métalliques à base d'éléments choisis parmi le vanadium, le niobium, le tantale, le molybdène, le tungstène, le fer, le cuivre, le zinc, le cobalt et le nickel, en particulier de particules métalliques sous forme d'hétéropolyanions (meilleure dispersion de la phase active, meilleure synergie entre les espèces métalliques, diminution des phases réfractaires à la sulfuration, etc.) et les propriétés structurales et texturales propres aux matrices mixtes micro/mésotructurées à base de silicium obtenus par voie aérosol.

De manière préférée, ladite matrice à base d'oxyde de silicium formant chacune des particules sphériques élémentaires du matériau préparé selon le procédé de l'invention comprend outre du silicium, au moins un élément Y choisi parmi l'aluminium, le fer, le bore, l'indium et le gallium, préférentiellement l'aluminium de manière à former un matériau aluminosilicate. Le matériau préparé selon le procédé de l'invention présente alors lorsque Y est l'aluminium des propriétés d'acido-basicité supérieures aux propriétés d'acido-basicité présentées par les matériaux aluminosilicates antérieurs, préparés en l'absence de précurseurs d'entités proto-zéolithiques et selon des protocoles de synthèse bien connus de l'Homme du métier utilisant des précurseurs inorganiques de silice et d'alumine.

De plus, le matériau préparé selon le procédé de l'invention est constitué de particules élémentaires sphériques de taille contrôlée, à savoir présentant un diamètre maximum égal à 200 µm, de préférence inférieur à 100 µm, variant avantageusement de 50 nm à 50 µm, très avantageusement de 50 nm à 30 µm et de manière encore plus avantageuse de 50 nm à 10 µm. La taille limitée de ces particules ainsi que leur forme sphérique homogène permet une meilleure diffusion des réactifs et des produits de réaction lors de l'emploi d'un catalyseur dont le matériau préparé selon le procédé de l'invention est un précurseur, dans des applications industrielles potentielles comparativement à des matériaux connus de l'état de la technique, obtenus hors voie aérosol et se présentant sous la forme de particules élémentaires de forme non homogène, c'est-à-dire irrégulière, et de taille très supérieure à 500 nm.

Le piégeage desdites particules métalliques au sein de la matrice oxyde mixte micro/mésostructurée génère des effets techniques additionnels favorables comme le contrôle de la taille desdites particules métalliques, l'augmentation de la stabilité thermique desdites particules métalliques, le développement d'interactions particules métalliques/support originales, etc. Lesdites particules métalliques se présentent sous la forme de polyoxométallates, préférentiellement sous la forme d'hétéropolyanions (HPA).

D'autre part, le procédé de préparation par voie aérosol selon l'invention permet d'élaborer de façon simple avec un nombre d'étapes limité des précurseurs de catalyseurs sulfurés. Le procédé de préparation par voie aérosol selon l'invention permet de conserver la stoechiométrie des espèces non volatiles, présentes dans la solution initiale selon ladite étape b), dans le matériau obtenu selon le procédé de l'invention, et donc d'assurer les propriétés attendues du matériau final en terme de composition chimique, à l'inverse d'autres procédés faisant intervenir des étapes de filtration et de lavage souvent à l'origine d'une perte en éléments initialement présent dans la solution pour la préparation du matériau final.

### Exposé de l'invention

La présente invention a pour objet un procédé de préparation d'un matériau inorganique à porosité hiérarchisée dans les domaines de la microporosité et de la mésoporosité, ledit matériau étant constitué d'au moins deux particules sphériques élémentaires ayant un diamètre maximal de 200 microns, chacune desdites particules sphériques comprenant des particules métalliques présentant une taille moyenne supérieure ou égale à 0,6 nm et strictement inférieure à 1 nm, contenant au moins un ou plusieurs métaux choisis parmi le vanadium, le niobium, le tantale, le molybdène, le tungstène, le fer, le cuivre, le zinc, le cobalt et le nickel, lesdites particules métalliques étant piégées de façon homogène et uniforme au sein d'une matrice, mésostructurée, à base d'oxyde de silicium, présentant des parois microporeuses d'épaisseur comprise entre 1 et 60 nm, ladite matrice étant constituée soit intégralement d'entités proto-zéolithiques, soit intégralement d'entités zéolithiques, soit d'un mélange d'entités proto-zéolithiques et d'entités zéolithiques, ledit procédé comprenant au moins les étapes suivantes :
a) la préparation d'une solution contenant des nanocristaux zéolithiques de taille nanométrique maximale égale à 60 nm à base de silicium et/ou des éléments précurseurs d'entités proto-zéolithiques à base de silicium,
b) le mélange en solution desdites particules métalliques ou d'au moins un précurseur métallique desdites particules métalliques, d'au moins un tensioactif et d'au moins ladite solution obtenue selon a) tel que le rapport des volumes de matières inorganiques et organiques V_{inorganique}/V_{organique} est compris entre 0,29 et 0,50,
c) l'atomisation par aérosol de ladite solution obtenue à l'étape b) pour conduire à la formation de gouttelettes sphériques,
d) le séchage desdites particules,
g) l'élimination d'au moins dudit agent structurant et d'au moins dudit tensioactif
h) la régénération desdites particules métalliques sous forme de polyoxométallate éventuellement décomposées au cours de l'étape g) par lavage du solide issu de ladite étape g) avec un solvant polaire pendant une durée de 1 à 24 heures,
i) une étape de séchage réalisée à une température comprise entre 40 et 100°C pendant une durée comprise entre 12 et 48 heures,
dans lequel lesdites particules métalliques se présentent sous la forme de polyoxométallate de formule (XₓMₘO_{y}Hₕ)^{q-} où H est l'atome d'hydrogène, O est l'atome d'oxygène, X est un élément choisi parmi le phosphore, le silicium, le bore, le nickel et le cobalt et M est un ou plusieurs éléments choisis parmi le vanadium, le niobium, le tantale, le molybdène, le tungstène, le fer, le cuivre, le zinc, le cobalt et le nickel, x étant égal à 0, 1, 2, ou 4, m étant égal à 5, 6, 7, 8, 9, 10, 11, 12 et 18, y étant compris entre 17 et 72, h étant compris entre 0 et 12 et q étant compris entre 1 et 20 (y, h et q étant des nombres entiers).

Ledit procédé de préparation selon l'invention comportant lesdites étapes a), b), c), d), g), h) et i) est appelé procédé principal selon l'invention. Le matériau inorganique préparé selon le procédé principal selon l'invention est un matériau mésostructuré entièrement amorphe, partiellement cristallisé (mixte amorphe/cristallisé) ou entièrement cristallisé.
Un matériau mésostructuré entièrement amorphe est obtenu selon le procédé principal de l'invention lorsque ladite étape a) consiste en la préparation d'une solution contenant uniquement des éléments précurseurs d'entités proto-zéolithiques à base de silicium, à savoir au moins un agent structurant et au moins un agent silicique : la matrice à base d'oxyde de silicium formant chacune des particules sphériques dudit matériau amorphe préparé selon le procédé principal selon l'invention présente des parois amorphes constituées d'entités proto-zéolithiques, lesquelles sont à l'origine de la microporosité présente au sein de chacune des particules sphériques dudit matériau. Les entités proto-zéolithiques sont des espèces préparées à partir de réactifs utilisés pour la synthèse de zéolithes conformément à ladite étape a) du procédé selon l'invention, la préparation desdites espèces n'ayant pas été menée jusqu'au stade de la formation de zéolithes cristallisées. Il en résulte que lesdites entités proto-zéolithiques, de petite taille, ne sont pas détectées lorsqu'elles sont caractérisées par diffraction aux rayons X aux grands angles. Plus précisément et conformément à l'invention, les entités proto-zéolithiques constituant les parois microporeuses amorphes de la matrice de chacune des particules sphériques dudit matériau amorphe préparé selon le procédé principal selon l'invention sont des espèces pouvant servir d'amorce à la synthèse de toute zéolithe connue de l'Homme du métier et en particulier, mais de façon non exhaustive, à la synthèse des zéolithes répertoriées dans l*"*Atlas of zeolite framework types", 6th revised Edition, 2007, C. Baerlocher, L. B. McCusker, D. H. Olson. Les entités proto-zéolithiques constitutives des parois amorphes de la matrice de chacune des particules dudit matériau amorphe préparé selon le procédé principal selon l'invention et à l'origine de la microporosité de celui-ci sont de préférence des espèces pour l'amorce d'au moins une zéolithe choisie parmi les zéolithes IZM-2, ZSM-5, ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, ferriérite et EU-1. De manière très préférée, lesdites entités proto-zéolithiques constituant les parois amorphes de la matrice de chacune des particules dudit matériau sont des espèces pour l'amorce d'au moins une zéolithe choisie parmi les zéolithes de type structural MFI, BEA, FAU et LTA. Ledit matériau amorphe est un matériau à porosité hiérarchisée dans les domaines de la microporosité et de la mésoporosité et à porosité organisée dans le domaine de la mésoporosité (mésostructuration).

Un matériau mésostructuré entièrement cristallisé est obtenu selon le procédé principal de l'invention lorsque ladite étape a) consiste en la préparation d'une solution contenant uniquement des nanocristaux zéolithiques de taille nanométrique maximale égale à 60 nm à base de silicium : la matrice à base d'oxyde de silicium formant chacune des particules sphériques du matériau cristallisé préparé selon le procédé principal selon l'invention présente des parois cristallisées constituées d'entités zéolithiques, lesquelles sont à l'origine de la microporosité présente au sein de chacune des particules sphériques dudit matériau. Ledit matériau cristallisé est un matériau à porosité hiérarchisée et organisée dans les domaines de la microporosité et de la mésoporosité.

Un matériau mésostructuré partiellement cristallisé est obtenu selon le procédé principal de l'invention lorsque ladite étape a) consiste en la préparation d'une solution contenant à la fois des nanocristaux zéolithiques de taille nanométrique maximale égale à 60 nm à base de silicium et des éléments précurseurs d'entités proto-zéolithiques, à savoir au moins un agent structurant et au moins un agent silicique : la matrice à base d'oxyde de silicium formant chacune des particules sphériques du matériau préparé selon le procédé principal selon l'invention présente des parois partiellement cristallisées formées d'entités proto-zéolithiques et d'entités zéolithiques, lesquelles sont à l'origine de la microporosité présente au sein de chacune des particules sphériques dudit matériau. Plus précisément, lesdites parois sont, pour une part, amorphes et constituées d'entités proto-zéolithiques et pour une autre part, cristallisées et constituées d'entités zéolithiques.

Selon un premier mode de réalisation préférée du procédé de préparation selon l'invention, on procède à la suite de ladite étape d) à une étape e) consistant à pratiquer l'autoclavage des particules issues de ladite étape d) puis on procède à une étape f) consistant à pratiquer le séchage desdites particules obtenues à l'issue de ladite e). Ladite étape f) est ensuite suivie de la mise en oeuvre de ladite étape g) d'élimination d'au moins dudit agent structurant et d'au moins dudit tensioactif. Ledit premier mode de réalisation du procédé de l'invention comportant lesdites étapes a), b), c), d),e), f), g), h) et i) est appelé procédé secondaire selon l'invention. Ledit procédé secondaire selon l'invention est avantageux lorsque ladite étape a) consiste en la préparation d'une solution contenant au moins des éléments précurseurs d'entités proto-zéolithiques : l'étape e) d'autoclavage réalise alors la transformation desdites entités proto-zéolithiques formées au cours de ladite étape a) dudit procédé secondaire en entités zéolithiques cristallisées. Ladite étape a) du procédé secondaire selon l'invention est encore avantageusement réalisée en préparant une solution contenant à la fois des nanocristaux zéolithiques de taille nanométrique maximale égale à 60 nm à base de silicium et des éléments précurseurs d'entités proto-zéolithiques à base de silicium. Le matériau inorganique préparé selon le procédé secondaire selon l'invention est un matériau mésostructuré cristallisé : la matrice à base d'oxyde de silicium formant chacune des particules sphériques du matériau préparé selon le procédé secondaire selon l'invention présente des parois cristallisées constituées d'entités zéolithiques, lesquelles sont à l'origine de la microporosité présente au sein de chacune des particules sphériques du matériau selon l'invention. Ledit matériau cristallisé obtenu selon le procédé secondaire de l'invention est un matériau à porosité hiérarchisée et organisée dans les domaines de la microporosité et de la mésoporosité.
On parlera du procédé selon l'invention pour désigner indifféremment le procédé principal selon l'invention, le procédé secondaire selon l'invention et les différents modes de réalisation du procédé décrits plus loin dans la présente description.

Le matériau inorganique cristallisé obtenu selon ledit procédé principal selon l'invention ou selon ledit procédé secondaire selon l'invention est un matériau à porosité hiérarchisée et organisée dans les domaines de la microporosité et de la mésoporosité. La matrice de chacune desdites particules sphériques constituant ledit matériau présente des parois cristallisées constituées exclusivement d'entités zéolithiques, lesquelles sont issues desdites entités proto-zéolithiques décrites ci-dessus et soumises à ladite étape e) d'autoclavage (procédé secondaire selon l'invention) et/ou des nanocristaux zéolithiques présents dans ladite étape a) du procédé principal selon l'invention ou du procédé secondaire selon l'invention. En particulier, lesdites entités zéolithiques constituant les parois cristallisées de la matrice de chacune des particules du matériau cristallisé préparé selon le procédé principal ou secondaire selon l'invention et à l'origine de la microporosité de celui-ci comprennent de préférence au moins une zéolithe choisie parmi les zéolithes IZM-2, ZSM-5, ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, ferriérite et EU-1. De manière très préférée, lesdites entités zéolithiques constituant les parois cristallisées de la matrice de chacune des particules dudit matériau cristallisé comprennent au moins une zéolithe choisie parmi les zéolithes de type structural MFI, BEA, FAU et LTA. Lesdites entités zéolithiques présentent une taille inférieure ou égale à 60 nm et avantageusement inférieure ou égale à 30 nm.

Le matériau préparé selon le procédé de l'invention est un matériau à porosité hiérarchisée dans les domaines de la microporosité et de la mésoporosité et organisée au moins dans le domaine de la mésoporosité. Par matériau à porosité hiérarchisée et organisée, on entend au sens de la présente invention un matériau présentant une double porosité à l'échelle de chacune desdites particules sphériques : une mésoporosité, c'est-à-dire la présence de pores organisés à l'échelle mésoporeuse ayant un diamètre uniforme (c'est-à-dire identique pour chaque mésopore), compris entre 1,5 et 30 nm, de préférence entre 2 et 20 nm, et très préférentiellement entre 2 et 15 nm, et répartis de façon homogène et régulière dans chacune desdites particules (mésostructuration) et une microporosité induite par les parois de chaque matrice à base d'oxyde de silicium, les caractéristiques de cette microporosité étant fonction soit des entités proto-zéolithiques constituant les parois amorphes de la matrice de chacune des particules sphériques du matériau amorphe obtenu selon le procédé principal selon l'invention, soit des entités zéolithiques constituant les parois cristallisées de la matrice de chacune des particules sphériques du matériau cristallisé obtenu selon le procédé principal ou le procédé secondaire selon l'invention soit encore des entités proto-zéolithiques et des entités zéolithiques constituant les parois partiellement cristallisées de la matrice de chacune des particules sphériques du matériau partiellement cristallisé obtenu selon le procédé principal selon l'invention. La microporosité se caractérise par la présence de micropores, au sein desdites parois, ayant un diamètre inférieur à 1,5 nm. Le matériau obtenu selon le procédé de l'invention présente également une macroporosité texturale intraparticulaire. Il est à noter qu'une porosité de nature microporeuse peut également résulter de l'imbrication du tensioactif, utilisé lors de ladite étape b) du procédé de préparation selon l'invention, avec la paroi inorganique au niveau de l'interface organique-inorganique développée lors de la mésostructuration de la composante inorganique dudit matériau. Avantageusement, aucune des particules sphériques constituant le matériau obtenu selon le procédé de l'invention ne présente de macropores.

La matrice à base d'oxyde de silicium, comprise dans chacune des particules sphériques constituant le matériau préparé selon le procédé selon l'invention, est mésostructurée : elle présente des mésopores ayant un diamètre uniforme, c'est-à-dire identique pour chaque mésopore, compris entre 1,5 et 30 nm, de préférence entre 2 et 20 nm et très préférentiellement entre 2 et 15 nm, répartis de façon homogène et régulière dans chacune des particules sphériques. La matière située entre les mésopores de chacune desdites particules sphériques est micoporeuse et de nature soit amorphe, soit partiellement cristallisée soit totalement cristallisée. Elle forme des parois, ou murs, dont l'épaisseur est comprise entre 1 et 60 nm, de préférence entre 1 et 30 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de la matrice à base d'oxyde de silicium, laquelle peut être hexagonale, vermiculaire ou cubique et de façon préférée vermiculaire.

Conformément à l'invention, lesdites particules métalliques sont piégées de façon homogène et uniforme dans la matrice comprise dans chacune desdites particules sphériques du matériau préparé selon le procédé de l'invention. Elles contiennent avantageusement au moins un ou plusieurs métaux choisis parmi le vanadium, le niobium, le tantale, le molybdène, le tungstène. Lesdites particules métalliques sont en particulier caractérisées par spectroscopie Raman et présentent au moins une bande de nombre d'ondes compris entre 750 et 1050 cm⁻¹. La spectroscopie Raman est une technique bien connue de l'Homme du métier. Plus précisément, lesdites particules métalliques présentent au moins une bande de nombre d'ondes compris entre 750 et 950 cm⁻¹ ou entre 950 et 1050 cm⁻¹. La bande de nombre d'ondes compris entre 750 et 950 cm⁻¹ est attribuable aux liaisons d'étirement (stretching en anglais) antisymétriques (M-O-M) ou aux liaisons d'étirement (stretching en anglais) symétriques (-O-M-O-). La bande de nombre d'ondes compris entre 950 et 1050 cm⁻¹ est attribuable aux modes d'étirement des liaisons terminales M=O. L'élément M présent dans les liaisons M-O-M, -O-M-O- et M=O est préférentiellement choisi parmi le vanadium, le niobium, le tantale, le molybdène, le tungstène et le mélange de ces métaux. L'appareillage Raman utilisé pour la mise en évidence desdites particules métalliques est décrit plus loin dans la présente description. Lesdites particules métalliques présentent une taille moyenne supérieure ou égale à 0,6 nm et strictement inférieure à 1 nm. La taille desdites particules métalliques est avantageusement mesurée par microscopie électronique à transmission (MET). L'absence de détection de particules métalliques en MET signifie que lesdites particules métalliques présentent une taille inférieure à 1 nm. Lesdites particules métalliques sont préférentiellement choisies parmi les particules métalliques se présentant sous la forme de polyoxométallate de formule (XₓMₘO_{y}Hₕ)^{q-}, les définitions de ce type de particules métalliques sont données ci-après.

Lesdites particules métalliques se présentent sous la forme de polyoxométallate de formule (XₓMₘO_{y}Hₕ)^{q-} (I) où H est l'atome d'hydrogène, O est l'atome d'oxygène, X est un élément choisi parmi le phosphore, le silicium, le bore, le nickel et le cobalt et M est un ou plusieurs éléments choisis parmi le vanadium, le niobium, le tantale, le molybdène, le tungstène, le fer, le cuivre, le zinc, le cobalt et le nickel, x étant égal à 0, 1, 2, ou 4, m étant égal à 5, 6, 7, 8, 9, 10, 11, 12 et 18, y étant compris entre 17 et 72, h étant compris entre 0 et 12 et q étant compris entre 1 et 20 (y, h et q étant des nombres entiers). Par la définition de cette formule, il est entendu, au sens de la présente invention, que les éléments H, X, M et O sont présents dans la structure des polyoxométallates. Lesdites particules métalliques sous la forme de polyoxométallate de formule (I) sont caractérisées par la présence d'au moins une bande de nombre d'ondes compris entre 750 et 1050 cm⁻¹ en spectroscopie Raman. Lesdites particules métalliques sous la forme de polyoxométallate de formule (I) présentent une taille moyenne supérieure ou égale à 0,6 nm et strictement inférieure à 1 nm. Lesdites particules métalliques sous la forme de polyoxométallate de formule (XₓMₘO_{y}Hₕ)^{q-}, piégées dans la matrice comprise dans chacune desdites particules sphériques du matériau préparé selon le procédé de l'invention, présentent avantageusement des atomes M dont le degré d'oxydation est égal à +IV, +V et/ou +VI et où M est préférentiellement choisi parmi le vanadium, le niobium, le tantale, le molybdène, le tungstène et le mélange de ces métaux. Les particules métalliques sous la forme de polyoxométallate sont piégées de façon homogène et uniforme dans la matrice.
Conformément à l'invention, lesdites particules métalliques sous la forme de polyoxométallate de formule (I) sont choisies parmi les isopolyanions et les hétéropolyanions (HPA). Elles sont caractérisées par la présence d'au moins une bande de nombre d'ondes variant entre 750 et 1050 cm⁻¹ en spectroscopie Raman.
Les isopolyanions et les hétéropolyanions piégés dans la matrice comprise dans chacune desdites particules sphériques du matériau préparé selon le procédé de l'invention sont parfaitement décrits dans l'ouvrage Heteropoly and Isopoly Oxométallates, Pope, Ed Springer-Verlag, 1983. De manière préférée, lesdites particules métalliques de formule (I) sont des hétéropolyanions. Lesdites particules métalliques de formule (I), de préférence sous forme d'hétéroplyanions, sont des sels portant une charge négative q compensée par des contre-ions chargés positivement de nature identique ou différente. Les contre-ions sont avantageusement assurés par des cations métalliques, en particulier des cations de métaux du groupe VIII tels que Co²⁺, Ni²⁺, les protons H⁺ et/ou les cations ammonium NH₄⁺. Lorsque tous les contre-ions sont des protons H⁺, on parle communément d'hétéropolyacide pour désigner la forme sous laquelle se trouvent lesdites particules métalliques de formule (I). Un tel hétéropolyacide est par exemple l'acide phosphomolybdique (3H⁺, PMo₁₂O₄₀³⁻) ou encore l'acide phosphotungstite (3H⁺, PW₁₂O₄₀³⁻).

Selon un premier mode de réalisation du matériau préparé selon le procédé de l'invention consistant à piéger des particules métalliques sous la forme d'isopolyanions dans chacune desdites matrices à base d'oxyde de silicium, l'élément X figurant dans la formule générale (I) ci-dessus est absent et x = 0. L'élément M est un ou plusieurs éléments choisis avantageusement parmi le vanadium, le niobium, le tantale, le molybdène, le tungstène, le cobalt et le nickel. Plus préférentiellement, l'élément M est un ou plusieurs éléments choisis parmi le vanadium, le niobium, le tantale, le molybdène et le tungstène. Le cobalt et/ou le nickel en tant qu'élément M présent dans ladite formule générale (I) est/sont avantageusement en mélange avec un ou plusieurs éléments M choisi(s) parmi le vanadium, le niobium, le tantale, le molybdène et le tungstène (substitution partielle de un ou plusieurs éléments M = V, Nb, Ta, Mo et W par Ni et/ou Co). De manière préférée, les m atomes d'éléments M présents dans la formule générale (I) sont tous exclusivement soit des atomes de Mo, soit des atomes de W, soit un mélange d'atomes de Mo et de W, soit un mélange d'atomes de W et de Nb, soit un mélange d'atomes de Mo et de V, soit un mélange d'atomes de W et de V, soit un mélange d'atomes de Mo et de Co, soit un mélange d'atomes de Mo et de Ni, soit un mélange d'atomes de W et de Ni. Selon ledit premier mode de réalisation, m est égal à 5, 6, 7, 8, 9, 10, 11, 12 et 18. De manière encore plus préférée, m est égal à 6, 7 et 12. Dans le cas particulier où l'élément M est le molybdène (Mo), la valeur de m vaut préférentiellement 7. Dans un autre cas particulier où l'élément M est le tungstène (W), la valeur de m vaut préférentiellement 12. Dans la formule générale (I), O désigne l'élément oxygène avec 17 ≤ y ≤ 48. q désigne la charge de l'isopolyanion, avec 3 ≤ q ≤ 12 et H est l'élément hydrogène avec h = 0 à 12. Un isopolyanion préféré selon ledit premier mode de réalisation présente la formule H₂W₁₂O₄₀⁶⁻ (h = 2, m = 12, y = 40, q = 6) ou encore la formule Mo₇O₂₄⁶⁻ (h = 0, m = 7, y = 24, q = 6).

Selon un deuxième mode de réalisation du matériau préparé selon le procédé de l'invention consistant à piéger des particules métalliques sous la forme d'hétéropolyanions (notés HPA) dans chacune desdites matrices à base d'oxyde de silicium, l'élément X est l'atome central dans la structure de l'hétéropolyanion et est choisi parmi P, Si, B, Ni et Co avec x = 1 ou 2. L'élément M est un atome métallique se trouvant avantageusement systématiquement en coordination octaédrique dans la structure de l'hétéropolyanion. L'élément M est un ou plusieurs éléments choisis avantageusement parmi le vanadium, le niobium, le tantale, le molybdène, le tungstène, le cobalt et le nickel. Plus préférentiellement, l'élément M est un ou plusieurs éléments choisis parmi le vanadium, le niobium, le tantale, le molybdène et le tungstène. Le cobalt et/ou le nickel en tant qu'élément M présent dans ladite formule générale (I) est/sont avantageusement en mélange avec un ou plusieurs éléments M choisis parmi le vanadium, le niobium, le tantale, le molybdène et le tungstène (substitution partielles de un ou plusieurs éléments M = V, Nb, Ta, Mo et W par Ni et/ou Co). De manière préférée, les m atomes M présents dans la formule générale (I) sont tous exclusivement soit des atomes de Mo, soit des atomes de W, soit un mélange d'atomes de Mo et de W, soit un mélange d'atomes de W et de Nb, soit un mélange d'atomes de Mo et de V, soit un mélange d'atomes de W et de V, soit un mélange d'atomes de Mo et de Co, soit un mélange d'atomes de Mo et de Ni, soit un mélange d'atomes de W et de Ni. Selon ledit deuxième mode de réalisation, m est égal à 5, 6, 7, 8, 9, 10, 11, 12 et 18 et de préférence égal à 5, 6, 9, 10, 11, 12, 18. Dans la formule générale (I), O désigne l'élément oxygène avec y compris entre 17 et 72, de préférence entre 23 et 42, q désigne la charge de l'hétéropolyanion avec 1 ≤ q ≤ 20, de préférence 3 ≤ q ≤ 12, et H est l'élément hydrogène avec h = 0 à 12.

Une première catégorie préférée d'hétéropolyanions (deuxième mode de réalisation du matériau préparé selon le procédé de l'invention) avantageusement piégés dans la matrice comprise dans chacune desdites particules sphériques du matériau préparé selon le procédé de l'invention est telle que lesdits hétéropolyanions présentent la formule XM₆O₂₄Hₕ^{q-} (avec x = 1, m = 6, y = 24, q = 3 à 12 et h = 0 à 12) et/ou la formule X₂M₁₀O₃₈Hₕ^{q-} (avec x = 2, m = 10, y = 38, q = 3 à 12 et h = 0 à 12) avec H, X, M, O, h, x, m, y et q ayant les mêmes définitions que celles données dans la formule générale (I) ci-dessus. De tels hétéropolyanions sont dits hétéropolyanions d'Anderson (Nature, 1937, 150, 850). Ils comprennent 7 octaèdres situés dans un même plan et reliés entre eux par les arêtes : 6 octaèdres entourent l'octaèdre central contenant l'hétéroélément X. Les hétéropolyanions CoMo₆O₂₄H₆³⁻ et NiMo₆O₂₄H₆⁴⁻ sont de bons exemples d'hétéropolyanions d'Anderson piégés dans chacune desdites matrices, le Co et le Ni étant respectivement les hétéroéléments X de la structure HPA. De tels hétéropolyanions d'Anderson de formule CoMo₆O₂₄H₆³⁻ et NiMo₆O₂₄H₆⁴⁻ présentent l'avantage lorsqu'ils sont sous forme de sels de cobalt ou de nickel (c'est-à-dire lorsque le cobalt ou le nickel sont présents comme cations pour compenser la charge négative de l'HPA), d'atteindre un rapport atomique [(promoteur = Co et/ou Ni)/Mo] compris entre 0,4 et 0,6, c'est-à-dire proche ou égal au rapport optimal connu de l'Homme du métier et compris entre 0,4 et 0,6 pour maximiser les performances des catalyseurs d'hydrotraitement, le Co et/ou le Ni pris en compte pour le calcul de ce rapport atomique étant le Co et/ou le Ni présents à la fois comme contre-ions et hétéroéléments X de la structure HPA. A titre d'exemple, les sels de cobalt ou de nickel de l'ion monomérique 6-molybdocobaltate (de formule CoMo₆O₂₄H₆³⁻, 3/2Co²⁺, ou CoMo₆O₂₄H₆³⁻, 3/2Ni²⁺) et les sels de cobalt ou de nickel de l'ion dimérique decamolybdocobaltate (de formule Co₂Mo₁₀O₃₈H₄⁶⁻, 3Co²⁺ ou Co₂Mo₁₀O₃₈H₄⁶⁻, 3Ni²⁺) se caractérisent par des rapports atomiques [(promoteurs = Co et/ou Ni)/Mo] respectivement de 0,41 et 0,5. De même à titre d'exemple, les sels de cobalt ou de nickel de l'ion monomérique 6-molybdonickellate (de formule NiMo₆O₂₄H₆⁴⁻, 2Co²⁺ et NiMo₆O₂₄H₆⁴⁻, 2Ni²⁺) et les sels de cobalt ou de nickel de l'ion dimérique decamolybdonickellate (de formule Ni₂MO₁₀O₃₈H₄⁸⁻, 4Co²⁺ et Ni₂Mo₁₀O₃₈H₄⁸⁻, 4Ni²⁺) se caractérisent par des rapports atomiques [(promoteurs = Co et/ou Ni)/Mo] respectivement de 0,5 et 0,6, le Co et / ou le Ni pris en compte pour le calcul de ce rapport atomique étant le Co et/ou le Ni présents à la fois comme contre-ions et hétéroéléments X de la structure HPA. Dans le cas où l'HPA contient au sein de sa structure du cobalt (X = Co) et du molybdène (M = Mo), celui-ci est de manière préférée dimérique. Un mélange des deux formes monomérique et dimérique dudit HPA peut aussi être utilisé. Dans le cas où l'HPA contient au sein de sa structure du nickel (X = Ni) et du molybdène (M = Mo), celui-ci est de manière préférée monomérique. Un mélange des deux formes monomérique et dimérique dudit HPA peut aussi être utilisé. De manière très préférée, l'HPA d'Anderson utilisé pour obtenir le matériau préparé selon le procédé de l'invention est un HPA dimérique renfermant du cobalt et du molybdène au sein de sa structure et le contre ion du sel d'HPA peut être du cobalt C0^{II}₃[Ci^{III}₂Mo₁₀O₃₈H₄] ou du nickel Ni^{II}₃[Co^{III}₂Mo₁₀O₃₈H₄].
Une deuxième catégorie préférée d'hétéropolyanions (deuxième mode de réalisation du matériau préparé selon le procédé de l'invention) avantageusement piégés dans la matrice comprise dans chacune desdites particules sphériques du matériau préparé selon le procédé de l'invention est telle que lesdits hétéropolyanions présentent la formule XM₁₂O₄₀Hₕ^{q-} (x = 1, m = 12, y = 40, h = 0 à 12, q = 3 à 12) et/ou la formule XM₁₁P₃₉Hₕ^{q-} (x = 1, m = 11, y = 39, h = 0 à 12, q = 3 à 12) avec H, X, M, O, h, x, m, y et q ayant les mêmes définitions que celles données dans la formule générale (I) ci-dessus. Les hétéropolyanions de formule XM₁₂P₄₀Hₕ^{q-} sont des hétéropolyanions présentant une structure de Keggin et les hétéropolyanions de formule XM₁₁O₃₉Hₕ^{q-} sont des hétéropolyanions présentant une structure de Keggin lacunaire. Les hétéropolyanions de structure de Keggin sont obtenus, pour des gammes de pH variables, selon les voies d'obtention décrites dans la publication de A. Griboval, P. Blanchard, E. Payen, M. Fournier, J. L. Dubois, Chem. Lett., 1997, 12, 1259. Des hétéropolyanions de structure de Keggin sont également connus sous des formes substituées dans lesquelles un élément métallique du groupe VIII, préférentiellement le cobalt ou le nickel, est en substitution du métal M présent dans la formule XM₁₂O₄₀Hₕ^{q-} : de telles espèces substituées de Keggin sont par exemple les hétéropolyanions PNiMo₁₁O₄₀H⁶⁻ ou PCoMo₁₁O₄₀H⁶⁻ (un atome de Mo substitué respectivement par un atome de Ni ou par un atome de Co). L'espèce PCoMo₁₁O₄₀H⁶⁻ est par exemple préparée selon le protocole décrit dans la publication de L. G. A. van de Water et al. J. Phys. Chem. B, 2005, 109, 14513. D'autres espèces substituées de Keggin, avantageusement piégées dans la matrice comprise dans chacune desdites particules sphériques du matériau préparé selon le procédé de l'invention, sont les espèces PVMo₁₁O₄₀⁴⁻, PV₂Mo₁₀O₄₀⁵⁻, PV₃Mo₉O₄₀⁶⁻ ou encore PV₄Mo₈O₄₀⁷⁻ (1 ou plusieurs atomes de V en substitution de 1 ou plusieurs atomes de Mo en tant qu'élément M) : ces espèces et leur mode de préparation sont décrits dans la publication de D. Soogund, et al. Appl. Catal. B, 2010, 98, 1, 39. D'autres espèces substituées d'hétéropolyanions de Keggin sont les espèces PMo₃W₉O₄₀³⁻ PMo₆W₆O₄₀³⁻ PMo₉W₃O₄₀³⁻. Encore d'autres espèces substituées d'hétéropolyanions de Keggin et leur mode de préparation sont décrits dans la demande de brevet FR 2.764.211 : lesdites espèces répondent à la formule Z_{w}XM₁₁0₄₀Z'C_{(z-2w)}. Z est le cobalt et/ou le nickel, X est le phosphore, le silicium ou le bore et M est le molybdène et/ou le tungstène, Z' est un atome en substitution d'un atome de l'élément M et est choisi parmi le cobalt, le fer, le nickel, le cuivre ou le zinc et C est un ion H⁺ ou un cation alkylammonium, C assurant le rôle de contre-ion comme Z, w prend la valeur de 0 à 4,5, z une valeur entre 7 et 9. Des hétéropolycomposés (hétéropolyanions + contre-ions) particulièrement adaptés pour la mise en oeuvre du matériau préparé selon le procédé de l'invention et répondant à cette formule sont par exemple les espèces PCoMo₁₁O₄₀H(NH₄)₆, PNiMo₁₁O₄₀H(NH₄)₆, SiCoMo₁₁O₄₀H₂(NH₄)₆, Co₃PCoMo₁₁O₄₀H, Co₃PNiMo₁₁O₄₀H dont la préparation est précisément décrite dans la demande FR 2.764.211. Les hétéropolyanions décrits dans la demande de brevet FR 2.764.211 sont avantageux car ils présentent un rapport atomique entre l'élément du groupe VIII et du groupe VI pouvant aller jusqu'à 0,5.

Des hétéropolyanions de Keggin de formule XM₁₂O₄₀^{q-} où X est choisi parmi le phosphore, le silicium et le bore et M est choisi parmi le molybdène et/ou le tungstène avec le cobalt et/ou le nickel en tant que contre-ions ont été décrits dans le brevet US 2.547.380 et la demande de brevet FR 2.749.778. En particulier, le brevet US 2.547.380 enseigne l'utilisation bénéfique dans des procédés d'hydrotraitement des sels d'hétéropolyacides de métaux de groupe VIII tels que les sels de cobalt ou de nickel des acides phosphomolybdique, silicomolybdique, phosphotungstique ou silicotungstique pour des applications en hydrotraitement. A titre d'exemple, on peut utiliser le phosphotungstate de nickel de formule 3/2Ni²⁺, PW₁₂O₄₀³⁻ de rapport Ni/W de 0,125 et le phosphomolybdate de cobalt de formule 3/2Co²⁺, PMo₁₂O₄₀³⁻. Une méthode de préparation est particulièrement décrite dans la demande de brevet FR 2.749.778 pour la préparation spécifique des hétéropolycomposés Co_{7/2}PMo₁₂O₄₀, Co₄SiMo₁₂O₄₀, Co_{7/2}SiMo₁₂O₄₀ et Co₆PMo₁₂O₄₀, qui conviennent particulièrement comme particules métalliques piégées dans la matrice comprise dans chacune des particules sphériques du matériau préparé selon le procédé de l'invention. Les hétéropolycomposés divulgués dans la demande de brevet FR 2.749.778 ont l'intérêt, notamment par rapport à ceux divulgués dans le brevet US 2.547.380, de présenter des rapports atomiques (élément du groupe VIII / élément du groupe VI) supérieurs et de conduire ainsi à des catalyseurs plus performants. Cette augmentation du rapport est obtenue par réduction des HPA. Ainsi, la présence d'au moins une partie du molybdène ou du tungstène est à une valence inférieure à sa valeur normale de 6 telle qu'elle résulte de la composition, par exemple, de l'acide phosphomolybdique, phosphotungstique, silicomolybdique ou silicotungstique.

Des hétéropolyanions présentant une structure de Keggin lacunaire et particulièrement adaptés pour la préparation du matériau selon le procédé de l'invention sont décrits dans la demande de brevet FR 2.935.139. Ils présentent la formule Ni_{a+y/2}XW_{11-y}O_{39-5/2y}, bH₂O dans laquelle Ni est le nickel, X est choisi parmi le phosphore, le silicium et le bore, W est le tungstène, O est l'oxygène, y = 0 ou 2, a = 3,5 si X est le phosphore, a = 4 si X est le silicium, a = 4,5 si X est le bore et b est un nombre compris entre 0 et 36. Lesdits hétéropolyanions ne présentent aucun atome de nickel en substitution d'un atome de tungstène dans leur structure, lesdits atomes de nickel étant placés en position de contre-ion dans la structure dudit hétéropolyanion. Ces sels d'hétéropolyanions sont avantageux en raison de leur grande solubilité. Des hétéropolyanions avantageux selon l'enseignement de la demande de brevet FR 2.935.139 pour la préparation du matériau selon le procédé de l'invention présentent la formule Ni₄SiW₁₁O₃₉ et Ni_{7/2}PW₁₁O₃₉.

Une troisième catégorie préférée d'hétéropolyanions (troisième mode de réalisation du matériau préparé selon le procédé de l'invention) avantageusement piégés dans la matrice comprise dans chacune desdites particules sphériques du matériau préparé selon le procédé de l'invention est telle que lesdits hétéropolyanions présentent la formule P₂Mo₅O₂₃Hₕ^{(6-h)-} avec h = 0, 1 ou 2. De tels hétéropolyanions sont dits hétéropolyanions de Strandberg. La préparation des HPA de Strandberg est décrite dans l'article de W-C. Cheng et al. J. Catal., 1988, 109, 163. Il a ainsi été montré par J. A. Bergwerff, et al., Journal of the American Chemical Society 2004, 126, 44, 14548, que l'utilisation de l'hétéropolyanion P₂Mo₅O₂₃Hₕ^{(6-h)-} avec h = 0, 1 ou 2, en particulier de l'hétéropolyanion P₂Mo₅O₂₃H₂⁴⁻ était particulièrement avantageuse pour des applications en hydrotraitement.

De manière avantageuse, les particules sphériques élémentaires constituant ledit matériau inorganique préparé selon le procédé de l'invention comprennent des particules métalliques sous la forme d'hétéropolyanions choisis parmi la première, la deuxième et/ou la troisième catégorie décrite ci-dessus. En particulier, lesdites particules métalliques peuvent être formées d'un mélange d'HPA de formules différentes appartenant à une même catégorie ou d'un mélange d'HPA appartenant à des catégories différentes. Par exemple, il est avantageux d'utiliser seuls ou en mélange les HPA de type PW₁₂O₄₀³⁻ avec des HPA de type Keggin PMo₁₂O₄₀³⁻, PCoMo₁₁O₄₀H⁶⁻ ainsi que P₂Mo₅O₂₃H₂⁴⁻ biens connus de l'Homme du métier.

Conformément à ladite étape a) du procédé de préparation selon l'invention, la solution contenant des nanocristaux zéolithiques de taille nanométrique maximale égale à 60 nm à base de silicium et/ou des éléments précurseurs d'entités proto-zéolithiques à base de silicium est préparée à partir de protocoles opératoires connus de l'Homme du métier.

Selon un premier mode de réalisation de ladite étape a) du procédé de préparation selon l'invention, on prépare une solution contenant des éléments précurseurs d'entités proto-zéolithiques à base de silicium. Plus particulièrement, on procède au mélange d'au moins un agent structurant et d'au moins un précurseur silicique de manière à préparer une solution contenant les éléments précurseurs d'entités proto-zéolithiques à base de silicium. Le précurseur silicique utilisé pour la mise en oeuvre de ladite étape a) pour la préparation desdites entités proto-zéolithiques est choisi parmi les précurseurs d'oxyde de silicium bien connus de l'Homme du métier. En particulier, on utilise avantageusement un précurseur silicique choisi parmi les précurseurs de silice habituellement utilisés dans la synthèse des zéolithes, par exemple on utilise de la silice solide en poudre, de l'acide silicique, de la silice colloïdale, de la silice dissoute ou un précurseur silicique de type alcoxyde de formule Si(OR)₄₋ₐR'ₐ où R = H, méthyle, éthyle et R' est une chaîne alkyle ou une chaîne alkyle fonctionnalisée, a étant compris entre 0 et 4 comme par exemple le tétraéthoxysilane encore appelé tétraéthylorthosilicate (TEOS). De manière préférée, le précurseur silicique est le TEOS. L'agent structurant utilisé pour la mise en oeuvre de ladite étape a) pour la préparation desdites entités proto-zéolithiques peut être ionique ou neutre selon la nature de la zéolithe obtenue à partir desdites entités proto-zéolithiques. Il est fréquent d'utiliser les agents structurants organiques de la liste non exhaustive suivante : des cations organiques azotés tel que le tétrapropylammonium (TPA), des éthercouronnes, des diamines ainsi que tout autre agent structurant organiques bien connu de l'Homme du métier pour la synthèse de zéolithe. De manière préférée, ledit agent structurant organique est l'hydroxyde de tétrapropylammonium TPAOH.
Conformément audit premier mode de réalisation de ladite étape a) du procédé de préparation selon l'invention, ladite étape a) est avantageusement mise en oeuvre en présence d'au moins un précurseur d'au moins un élément Y choisi parmi l'aluminium, le fer, le bore, l'indium et le gallium. Ledit précurseur de l'élément Y avantageusement utilisé pour la mise en oeuvre de ladite étape a) pour la préparation desdites entités proto-zéolithiques peut être tout composé comprenant l'élément Y et pouvant libérer cet élément en solution, notamment en solution aqueuse ou aquo-organique, sous forme réactive. Dans le cas préféré où Y est l'aluminium, le précurseur aluminique est avantageusement un sel inorganique d'aluminium de formule AlZ₃, Z étant un halogène, un nitrate ou un hydroxyde. De préférence, Z est le chlore. Le précurseur aluminique peut également être un sulfate d'aluminium de formule Al₂(SO₄)₃. Le précurseur aluminique peut être aussi un précurseur organométallique de formule Al(OR)₃ ou R = éthyle, isopropyle, n-butyle, s-butyle (Al(O^{s}C₄H₉)₃) ou t-butyle ou un précurseur chélaté tel que l'aluminium acétylacétonate (Al(C₅H₈O₂)₃). De préférence, R est le s-butyle. Le précurseur aluminique peut aussi être de l'aluminate d'ammonium ou de l'alumine proprement dite sous l'une de ses phases cristallines connues de l'Homme du métier (alpha, delta, teta, gamma), de préférence sous forme hydratée ou qui peut être hydratée. On peut également utiliser des mélanges des précurseurs cités ci-dessus. Certains ou l'ensemble des précurseurs aluminiques et siliciques peuvent éventuellement être ajoutés sous la forme d'un seul composé comprenant à la fois des atomes d'aluminium et des atomes de silicium, par exemple une silice alumine amorphe.
Conformément audit premier mode de réalisation de ladite étape a) du procédé de préparation selon l'invention, on obtient généralement la solution contenant les éléments précurseurs desdites entités proto-zéolithiques en préparant un mélange réactionnel renfermant au moins un précurseur silicique, éventuellement au moins un précurseur d'au moins un élément Y choisi parmi l'aluminium, le fer, le bore, l'indium et le gallium, de préférence au moins un précurseur aluminique, et au moins un agent structurant, préférentiellement de nature organique. Le mélange réactionnel est soit aqueux soit aquo-organique, par exemple un mélange eau-alcool. Le mélange réactionnel peut être mis sous conditions hydrothermales sous une pression autogène, éventuellement en ajoutant un gaz, par exemple de l'azote. Ladite étape a) est préférentiellement réalisée à une température comprise entre la température ambiante et 200°C, de préférence entre la température ambiante et 170°C et de manière encore préférentielle à une température qui ne dépasse pas 120°C et de façon encore plus préférée à une température qui ne dépasse pas 60°C jusqu'à la formation d'une solution contenant les entités proto-zéolithiques constituant les parois microporeuses de la matrice de chacune des particules sphériques du matériau obtenu selon le procédé de l'invention. Selon un mode opératoire préféré, le mélange réactionnel renfermant au moins ledit agent structurant, au moins ledit précurseur silicique et avantageusement au moins ledit précurseur d'au moins un élément Y choisi parmi l'aluminium, le fer, le bore, l'indium et le gallium est mûri à température ambiante de façon à obtenir une solution contenant les entités proto-zéolithiques constituant les parois microporeuses de la matrice de chacune des particules sphériques du matériau obtenu selon le procédé de l'invention.

Les entités proto-zéolithiques obtenues par la mise en oeuvre dudit premier mode de réalisation de ladite étape a) du procédé de préparation selon l'invention, en particulier du procédé secondaire selon l'invention, sont des espèces intermédiaires à la formation d'entités zéolithiques. La transformation des entités proto-zéolithiques constituant les parois microporeuses du matériau obtenu à la fin de l'étape d) du procédé secondaire selon l'invention est le résultat de l'étape d'autoclavage e) dudit procédé secondaire selon l'invention, ce qui conduit à la formation de parois microporeuses cristallisées entièrement constituées d'entités zéolithiques telles que décrites ci-dessus. La transformation des entités proto-zéolithiques en entités zéolithiques est suivi par la méthode d'analyse connue de l'Homme du métier de Diffraction des Rayons X aux grands angles (pas de réponse jusqu'à la détection de signaux correspondants aux plus petites entités zéolithiques cristallisées détectables).

Selon un deuxième mode de réalisation de ladite étape a) du procédé de préparation selon l'invention, on prépare une solution colloïdale dans laquelle sont dispersés des nanocristaux zéolithiques, à base de silicium, de taille nanométrique maximale égale à 60 nm à partir d'au moins un agent structurant, d'au moins un précurseur silicique et préférentiellement d'au moins un précurseur d'au moins un élément Y choisi parmi l'aluminium, le fer, le bore, l'indium et le gallium, de préférence au moins un précurseur aluminique. Ledit précurseur silicique, ledit précurseur d'au moins dudit élément Y, de préférence le précurseur aluminique, et ledit agent structurant sont avantageusement choisis parmi les composés décrits ci-dessus pour la préparation de ladite solution contenant des éléments précurseurs d'entités proto-zéolithiques conformément audit premier mode de réalisation de ladite étape a) du procédé de préparation selon l'invention. Conformément audit deuxième mode de réalisation de ladite étape a) du procédé de préparation selon l'invention, le mélange réactionnel renfermant au moins un précurseur silicique, préférentiellement au moins un précurseur d'au moins un élément Y choisi parmi l'aluminium, le fer, le bore, l'indium et le gallium, de préférence au moins un précurseur aluminique, et au moins un agent structurant est soit aqueux soit aquo-organique, par exemple un mélange eau-alcool. Le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température comprise entre 60 et 120°C jusqu'à la formation de nanocristaux zéolithiques de taille nanométrique maximale égale à 60 nm. De manière préférée, le mélange réactionnel est mûri à une température comprise entre 70°C et 100°C pendant une durée comprise entre 3 et 6 jours. A l'issue dudit traitement hydrothermal, on obtient une solution colloïdale dans laquelle lesdits nanocristaux se trouvent à l'état dispersé. La synthèse desdits nanocristaux zéolithiques est suivie par diffraction des rayons X aux grands angles et la taille desdits nanocristaux est contrôlée par diffusion de la lumière et par microscopie électronique en transmission. L'Homme du métier saura ajuster les conditions opératoires, et en particulier les conditions du traitement hydrothermique, de manière à obtenir ladite solution colloïdale dans laquelle lesdits nanocristaux, de taille nanométrique maximale égale à 60 nm, se trouvent à l'état dispersé.

Selon un troisième mode de réalisation de ladite étape a) du procédé de préparation selon l'invention, on procède à la redispersion en solution de cristaux zéolithiques de façon à obtenir une solution colloïdale de nanocristaux zéolithiques de taille nanométrique maximale égale à 60 nm. Les cristaux zéolithiques utilisés pour la mise en oeuvre de ladite étape a) conformément audit troisième mode de réalisation peuvent avoir une taille allant au delà de 60 nm. Toute zéolithe cristallisée connue dans l'état de la technique qui a la propriété de se disperser en solution, par exemple en solution aquo-organique, sous la forme de nanocristaux de taille nanométrique maximale égale à 60 nm convient pour la mise en oeuvre de ladite étape a). La dispersion desdits cristaux zéolithiques est réalisée par toute méthode connue de l'Homme du métier, par exemple par sonication. En particulier, lesdits cristaux de zéolithes peuvent être purement siliciques ou bien contenir, outre du silicium, au moins un élément Y choisi parmi l'aluminium, le fer, le bore, l'indium et le gallium, de préférence l'aluminium. Lesdits cristaux zéolithiques, utilisés pour la mise en oeuvre de ladite étape a), sont synthétisés par des méthodes connues de l'Homme du métier. Ils peuvent être déjà sous la forme de nanocristaux. L'obtention de cristaux zéolithiques se dispersant sous la forme de nanocristaux de taille nanométrique maximale égale à 60 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape g) du procédé de préparation selon l'invention.

Ladite étape a) du procédé de préparation selon l'invention est réalisée par la mise en oeuvre de l'un des trois modes de réalisation décrits ci-dessus ou par la mise en oeuvre conjointe d'au moins deux des trois modes de réalisation décrits ci-dessus. En particulier, ladite étape a) consiste avantageusement en la préparation d'une solution contenant des éléments précurseurs d'entités proto-zéolithiques à base de silicium et d'un élément Y, préférentiellement à base de silicium et d'aluminium, ou en la préparation d'une solution colloïdale contenant simultanément des nanocristaux zéolithiques, à base de silicium, de taille nanométrique maximale égale à 60 nm et des éléments précurseurs à base de silicium.

Conformément à ladite étape a) du procédé de préparation selon l'invention et quel que soit le mode de réalisation de ladite étape a), il est préféré de travailler dans un milieu réactionnel basique afin de favoriser le développement desdites entités proto-zéolithiques et/ou desdits nanocristaux. La basicité de la solution selon ladite étape a) est avantageusement assurée par la basicité de l'agent structurant employé.

La solution contenant les éléments précurseurs d'entités proto-zéolithiques, préparée selon ledit premier mode de réalisation de ladite étape a), et la solution colloïdale contenant des nanocristaux zéolithiques de taille nanométrique maximale égale à 60 nm, préparée selon ledit deuxième mode de réalisation de ladite étape a), est obtenue à partir de protocoles opératoires connus de l'Homme du métier. Pour exemple, des solutions contenant des éléments précurseurs d'entités proto-zéolithiques de type bêta ou des solutions colloïdales contenant des nanocristaux zéolithiques de type bêta sont réalisées à partir du protocole opératoire décrit par P. Prokesova, S. Mintova, J. Cejka, T. Bein et coll., Micropor. Mesopor. Mater., 2003, 64, 165. Des solutions contenant des éléments précurseurs d'entités proto-zéolithiques de type FAU ou des solutions colloïdales contenant des nanocristaux zéolithiques de type FAU sont réalisées à partir des protocoles opératoires décrits par Y. Liu, W. Z. Zhang, T. J. Pinnavaia et coll., J. Am. Chem Soc., 2000, 122, 8791 et K. R. Kloetstra, H. W. Zandbergen, J. C. Jansen, H. vanBekkum, Microporous Mater., 1996, 6, 287. Des solutions contenant des éléments précurseurs d'entités proto-zéolithiques de type ZSM-5 ou des solutions colloïdales contenant des nanocristaux zéolithiques de type ZSM-5 sont réalisées à partir du protocole opératoire décrit par A. E. Persson, B. J. Schoeman, J. Sterte, J. -E. Otterstedt, Zeolites, 1995, 15, 611. Dans le cas particulier d'un matériau purement silicique, des solutions contenant des éléments précurseurs d'entités proto-zéolithiques de type silicalite ou des solutions colloïdales contenant des nanocristaux zéolithiques de type silicalite sont réalisées à partir du protocole opératoire décrit A. E. Persson, B. J. Schoeman, J. Sterte, J. -E. Otterstedt, Zeolites, 1994, 14, 557.

Les entités proto-zéolithiques obtenues par la mise en oeuvre de ladite étape a) du procédé selon l'invention, en particulier par la mise en oeuvre de ladite étape a) du procédé principal selon l'invention ou ladite étape a) du procédé secondaire selon l'invention, sont des espèces intermédiaires à la formation des entités zéolithiques et en particulier à des nanocristaux de zéolithe. La transformation des entités proto-zéolithiques constitutives des parois microporeuses amorphes du matériau obtenu à la fin de l'étape d) du procédé de préparation selon l'invention est le résultat de l'étape d'autoclavage e) dudit procédé secondaire selon l'invention, ce qui conduit à la formation de parois microporeuses cristallisées entièrement constituées d'entités zéolithiques telles que décrites ci-dessus. La transformation des entités proto-zéolithiques en entités zéolithiques est suivi par la méthode d'analyse connue de l'Homme du métier de Diffraction des Rayons X aux grands angles (pas de réponse pour les matériaux inorganiques microporeux amorphes obtenus selon le procédé principal de préparation selon l'invention et détection de signaux correspondants au moins aux plus petites entités cristallisées détectables pour les matériaux inorganiques microporeux cristallisés obtenus selon le procédé secondaire selon l'invention).

Conformément à l'étape b) du procédé de préparation selon l'invention, on mélange lesdites particules métalliques ou leurs précurseurs, au moins un tensioactif et au moins ladite solution obtenue selon ladite étape a) dans un milieu préférentiellement aqueux ou aquo-organique.

Conformément à l'étape b) du procédé de préparation selon l'invention, le tensioactif utilisé est un tensioactif ionique ou non ionique ou un mélange des deux. De préférence, le tensioactif ionique est choisi parmi des tensioactifs anioniques tels que les sulfates comme par exemple le dodécylsulfate de sodium (SDS). De préférence, le tensioactif non ionique peut être tout copolymère possédant au moins deux parties de polarités différentes leur conférant des propriétés de macromolécules amphiphiles. Ces copolymères appartiennent avantageusement à l'une des familles de polymères suivantes : les copolymères fluorés (-[CH₂-CH₂-CH₂-CH₂-O-CO-R1- avec R1 = C₄F₉, C₈F₁₇, etc.), les copolymères biologiques comme les polyacides aminés (poly-lysine, alginates, etc.), les dendrimères, les copolymères blocs constitués de chaînes de poly(oxyde d'alkylène). Tout autre copolymère à caractère amphiphile connu de l'Homme du métier peut être utilisé s'il permet d'obtenir une solution stable (c'est à dire ne conduisant pas à la formation d'un précipité dans la durée précédant l'atomisation) dans l'étape b) du procédé de préparation selon l'invention, comme le poly(styrène-b-acrylamide) par exemple (S. Förster, M. Antionnetti, Adv.Mater, 1998, 10, 195-217 ; S. Förster, T.Plantenberg, Angew. Chem. Int. Ed, 2002, 41, 688-714 ; H. Cölfen, Macromol. Rapid Commun, 2001, 22, 219-252). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé constitué de deux chaînes de poly(oxyde d'éthylène) et d'une chaîne de poly(oxyde de propylène). Plus précisément, on utilise un composé de formule (PEO)ₓ-(PPO)_{y}-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans l'étape b) du procédé de préparation de l'invention. Pour un copolymère à quatre blocs, deux des blocs sont constitués d'une chaîne de poly(oxyde d'alkylène) de nature hydrophile et les deux autres blocs sont constitués d'une chaîne de poly(oxyde d'alkylène) de nature hydrophobe. Tout agent gonflant permettant de modifier la taille des micelles peut avantageusement être ajouté avec le tensioactif. Par exemple, ledit agent gonflant est le polypropylèneglycol.

Conformément à ladite étape b) du procédé de préparation selon l'invention, on introduit dans ledit mélange soit des particules métalliques soit au moins un précurseur métallique desdites particules métalliques. Lesdites particules métalliques sont choisies parmi les particules métalliques sous la forme de polyoxométallate de formule (XₓMₘO_{y}Hₕ)^{q-} (I), en particulier des isopolyanions ou des hétéropolyanions tels que décrits plus haut dans la présente description, et les nanoparticules oxydes telles que décrites plus haut dans la présente description. Lesdites particules métalliques sont préparées selon des modes de synthèse connus de l'Homme du métier ou disponibles commercialement.

Lesdites particules métalliques sont aisément préparées par la mise en solution, préalablement à ladite étape b), du(es) précurseur(s) métallique(s) nécessaire(s) à leur obtention, dans un solvant, ladite solution étant ensuite introduite dans le mélange selon ladite étape b). De manière préférée, le solvant utilisé pour la mise en solution du ou des précurseurs est aqueux. La solution obtenue à l'issue de la mise en solution du(es) précurseur(s) métallique(s), préalablement à l'étape b), contenant lesdits précurseurs, est limpide et de pH neutre ou acide, de préférence acide. Lesdites particules métalliques peuvent encore être avantageusement préparées en introduisant directement le(s) précurseur(s) métallique(s) nécessaire(s) à leur obtention dans le mélange selon ladite étape b).

De manière générale et de façon connue de l'Homme du métier, les isopolyanions se forment par réaction des oxoanions de type MO₄ⁿ⁻ (la valeur de n dépendant de la nature M : n étant préférentiellement égal à 2 lorsque M = Mo ou W et préférentiellement égal à 3 lorsque M = V, Nb, Ta) entre eux où M est un ou plusieurs éléments choisis parmi le vanadium, le niobium, le tantale, le molybdène, le tungstène, le cobalt et le nickel. Par exemple, les composés molybdiques sont bien connus pour ce genre de réactions, puisque selon le pH, le composé molybdique en solution peut se présenter sous la forme MoO₄²⁻ ou sous la forme d'un isopolyanion Mo₇O₂₄⁶⁻ obtenu selon la réaction : 7MoO₄²⁻ + 8H⁺ → Mo₇O₂₄⁶⁻ + 4H₂O. Concernant les composés à base de tungstène, l'acidification potentielle du milieu réactionnel peut conduire à générer l'a-métatungstate, 12 fois condensé : 12WO₄²⁻ + 18H⁺ →H₂W₁₂O₄₀⁶⁻ + 8H₂O. Ces espèces d'isopolyanions, en particulier les espèces Mo₇O₂₄⁶⁻ et H₂W₁₂O₄₀⁶⁻ sont avantageusement employées comme particules métalliques dans le procédé de préparation selon l'invention. La préparation des isopolyanions est amplement décrite dans l'ouvrage Heteropoly and Isopoly Oxométallates, Pope, Ed Springer-Verlag, 1983 (chapitre II, pages 15 et 16).

De manière générale et de façon connue de l'Homme du métier, les hétéropolyanions sont obtenus par polycondensation d'oxoanions de type MO₄ⁿ⁻ (la valeur de n dépendant de la nature M : n étant préférentiellement égal à 2 lorsque M = Mo ou W et préférentiellement égal à 3 lorsque M = V, Nb, Ta) autour d'un (ou plusieurs) oxoanion(s) de type XO₄^{q-}, (la valeur de q dépendant de la nature M, la charge q étant dictée par la règle de l'octet et la nature de X), M étant un ou plusieurs éléments choisis parmi le vanadium, le niobium, le tantale, le molybdène, le tungstène, le cobalt et le nickel et X étant un élément choisi parmi P, Si, B, Ni et Co. Il y a alors élimination de molécules d'eau et création de ponts oxo entre les atomes X et M. Ces réactions de condensation sont régies par différents facteurs expérimentaux comme le pH, la concentration des espèces en solution, la nature du solvant, et le rapport du nombre d'atomes M/X. La préparation des hétéropolyanions est amplement décrite dans l'ouvrage Heteropoly and Isopoly Oxométallates, Pope, Ed Springer-Verlag, 1983 (chapitre II, pages 15 et 16).
Des modes de préparation particuliers d'hétéropolyanions pouvant avantageusement être mis en oeuvre pour la synthèse des particules métalliques utilisées dans ladite étape b) du procédé de préparation selon l'invention sont décrits dans les demandes de brevets FR 2.935.139, FR 2.764.211, FR 2.749.778 et FR 2.843.050. D'autres modes de préparation particuliers d'hétéropolyanions comme particules métalliques utilisées dans le procédé de préparation selon l'invention sont décrits dans les différentes publications indiquées plus haut pour la description des différentes catégories d'HPA.

Par exemple, pour la mise en oeuvre de ladite étape b) du procédé selon l'invention, les particules métalliques sous la forme de polyoxométallate de formule (I), préférentiellement sous la forme d'hétéropolyanions, sont aisément préparées à partir des précurseurs métalliques nécessaires à leur obtention, lesquels sont soit mis en solution, préalablement à la mise en oeuvre de la dite étape b), dans un solvant avant d'être introduits dans ledit mélange selon l'étape b) soit introduits directement dans ledit mélange selon l'étape b). Dans le cas où lesdits précurseurs métalliques sont mis en solution dans un solvant, préférentiellement aqueux, préalablement à la mise en oeuvre de ladite étape a), la solution obtenue est limpide et de pH neutre ou acide, préférentiellement acide. Lesdites particules métalliques, préférentiellement les hétéroplyanions, peuvent encore être utilisées sous forme solide et isolée, et être introduites directement dans le mélange selon ladite étape b) du procédé de préparation selon l'invention ou être remises en solution dans un solvant de préférence aqueux avant d'être introduites dans ledit mélange selon ladite étape b).

Selon le mode de réalisation consistant à mettre en solution les précurseurs métalliques des polyoxométallate de formule (I) préalablement à la mise en oeuvre de ladite étape b), il est avantageux d'ajouter à la solution, contenant lesdits précurseurs, au moins un agent complexant desdits précurseurs métalliques afin de faciliter l'obtention lors de l'étape b) d'un mélange atomisable en vue de la mise en oeuvre de ladite étape c) du procédé de préparation selon l'invention. Ledit agent complexant peut être tout composé connu de l'Homme du métier pour sa complexation possible avec des précurseurs métalliques du type HPA. Par exemple, ledit agent complexant est l'urée, le thiourée ou l'acétylacétonate.

Lesdites particules métalliques ou leurs précurseurs sont introduits dans le mélange selon ladite étape b) dans une quantité telle que la teneur massique en vanadium, niobium, tantale, molybdène, tungstène et leurs mélanges est comprise entre 1 et 40% exprimé en % poids d'oxyde par rapport à la masse du matériau inorganique final sous forme oxyde, de préférence entre 4 et 35% poids, de façon préférée entre 4 et 30% poids et de manière encore plus préférée entre 4 et 20% poids. Lesdites particules métalliques ou leurs précurseurs sont également introduits dans le mélange selon ladite étape b) dans une quantité telle que la teneur massique globale en métal du groupe VIII, notamment en cobalt et nickel, est comprise entre 0 et 15% exprimé en % poids d'oxyde par rapport à la masse du matériau inorganique final sous forme oxyde, de préférence entre 0,5 et 10% poids et de manière encore plus préférée entre 1 et 8% poids.

La solution obtenue à l'issue de l'étape b) du procédé de préparation selon l'invention peut être acide, neutre ou basique. De préférence, ladite solution est neutre, légèrement acide ou légèrement basique, c'est-à-dire qu'elle présente de préférence un pH compris entre 5 et 9. La solution obtenue à l'issue de l'étape b) peut être aqueuse ou peut être un mélange eau-solvant organique, le solvant organique étant préférentiellement un solvant polaire, notamment un alcool, préférentiellement de l'éthanol.

La quantité en composés organiques, c'est à dire en tensioactif et en agent structurant, présente dans le mélange obtenu à l'issue de la mise en oeuvre de ladite étape b) du procédé de préparation selon l'invention est définie par rapport à la quantité de matière inorganique présente dans ledit mélange. La quantité de matière inorganique correspond à la quantité de matière des éléments métalliques introduits au moyen des précurseurs métalliques définis ci-dessus ou au moyen des particules métalliques elles-mêmes, à la quantité de matière du silicium introduit au moyen dudit précurseur silicique et à celle de l'élément Y introduit au moyen dudit précurseur de l'élément Y lorsqu'il est présent. Le rapport volumique V_{inorganique}/V_{organique} dans le mélange obtenu après la mise en oeuvre de l'étape b) est tel que le système binaire organique-inorganique formé lors de l'étape d'atomisation c) du procédé de préparation selon l'invention subisse un processus de mésotructuration par auto-assemblage du tensioactif conjointement aux réactions d'hydrolyse/condensation des divers précurseurs inorganiques. Ledit rapport volumique V_{inorganique}/V_{organique} est défini comme suit : V_{inorganique}/V_{organique} = ∑ᵢ(m_{inorg} i / ρ_{inorg i}) / ∑ⱼ(m_{org j} / ρ_{org j}) avec i variant de 1 au nombre total de précurseurs inorganiques et j variant de 1 au nombre total de tensioactifs et d'agents structurants et où m_{inorg i} est la masse de l'oxyde associé au précurseur inorganique i condensé dans la particule élémentaire solide obtenue par atomisation, m_{org j} est la masse du tensioactif ou de l'agent structurant j non volatile se retrouvant dans la particule élémentaire solide obtenue par atomisation et ρ_{org j} et ρ_{inorg i} sont les densités respectivement associées à chacun des composés organiques non volatiles j et inorganiques i. La densité de l'oxyde associé au précurseur inorganique i est égale à la densité de l'oxyde cristallisé correspondant diminuée de 15%. Dans le cadre de l'invention, ∑ᵢ(m_{inorg i} / ρ_{inorg i}) correspond généralement à la somme des rapports des masse des oxydes d'au moins un élément choisi parmi le vanadium, le niobium, le tantale, le molybdène, le tungstène, le fer, le cuivre, le zinc, le cobalt et le nickel additionnée des masses de SiO₂ et de l'oxyde de l'élément Y, préférentiellement de Al₂O₃ sur leur densité respective. De même, ∑ⱼ(m_{org j} / ρ_{org j}) correspond généralement à la somme des rapports de la masse de l'agent structurant, par exemple TPAOH, additionnée de la masse du tensioactif, par exemple le tensioactif P123 sur leur densité respective. L'utilisation éventuelle d'un agent complexant des précurseurs métalliques des polyoxométallates est également pris en compte dans le calcul ∑ᵢ(m_{inorg i} / ρ_{inorg i}). Le solvant polaire préférentiellement l'éthanol, ainsi que l'eau n'entrent pas en compte dans le calcul dudit rapport V_{inorganique}/V_{organique}. Les espèces comprenant un élément Y, de préférence les espèces aluminiques, éventuellement introduites à un stade ultérieur à ladite étape b) du procédé de préparation selon l'invention, comme cela est décrit plus loin dans la présente description, ne sont pas prises en compte pour le calcul du rapport volumique V_{inorganiqu}/V_{organique} défini ci-dessus.
A l'inverse si des précurseurs inorganiques autres que ceux mentionnés ci-dessus sont présents dans le mélange à l'issue de l'étape b) du procédé de préparation, la masse des oxydes associés est à prendre en compte dans le calcul de V_{inorg}.
Conformément à l'invention, la quantité de matière organique et la quantité de matière inorganique dans le mélange à l'issue de la mise en oeuvre de l'étape b) est tel que le rapport V_{inorganique}/V_{organique} est compris entre 0,29 et 0,50 et de préférence entre 0,30 et 0,40.
Conformément à l'étape b) du procédé selon l'invention, la concentration initiale en tensioactif, introduit dans le mélange, définie par c₀ est telle que c₀ est inférieure ou égale à c_{mc}, le paramètre c_{mc} représentant la concentration micellaire critique bien connue de l'Homme du métier, c'est-à-dire la concentration limite au-delà de laquelle se produit le phénomène d'auto-arrangement des molécules du tensioactif dans la solution. Avant atomisation, la concentration en molécules de tensioactif dans la solution définie par l'étape b) du procédé de préparation selon l'invention ne conduit donc pas à la formation de phases micellaires particulières. Dans une mise en oeuvre préférée du procédé selon l'invention, la concentration c₀ est inférieure à la c_{mc}, le rapport V_{inorganique}/V_{organique} est tel que la composition du système binaire vérifie les conditions de composition pour lesquelles un mécanisme de mésostructuration se produit par auto-assemblage coopératif des réactifs (V_{inorganique}/V_{organique} est compris entre 0,29 et 0,50 et de préférence entre 0,30 et 0,40) et ladite solution visée à l'étape b) du procédé de préparation selon l'invention est un mélange eau-alcool.

Dans le cas où la solution visée à l'étape b) du procédé de préparation selon l'invention est un mélange eau-solvant organique, de préférence neutre, il est essentiel au cours de l'étape b) du procédé de préparation selon l'invention que la concentration en tensioactif, à l'origine de la mésostructuration de la matrice, soit inférieure à la concentration micellaire critique et que le rapport V_{inorganiqu}/V_{organique} soit compris entre 0,29 et 0,50 et de préférence entre 0,30 et 0,40 de sorte que l'évaporation de ladite solution aquo-organique, préférentiellement neutre, au cours de l'étape c) du procédé de préparation selon l'invention par la technique d'aérosol induise un phénomène de micellisation ou d'auto-assemblage conduisant à la mésostructuration de la matrice du matériau obtenu selon le procédé de l'invention. Lorsque c₀ < c_{mc}, la mésostructuration de la matrice du matériau obtenu selon le procédé de l'invention est consécutive à une concentration progressive, au sein de chaque gouttelette, du ou des précurseurs métalliques ou des particules métalliques elles mêmes, des éléments précurseurs d'entités proto-zéolithiques et/ou des nanocristaux zéolithiques de taille nanométrique maximale égale à 60 nm à base de silicium et du tensioactif, jusqu'à une concentration en tensioactif c > c_{mc} résultant d'une évaporation de la solution aquo-organique, préférentiellement neutre.

L'étape d'atomisation du mélange selon l'étape c) du procédé de préparation selon l'invention produit des gouttelettes sphériques. La distribution en taille de ces gouttelettes est de type lognormale. Le générateur d'aérosol utilisé ici est un appareil commercial de modèle 9306 A fourni par TSI ayant un atomiseur 6 jets. L'atomisation de la solution se fait dans une chambre dans laquelle est envoyé un gaz vecteur, un mélange O₂/N₂ (air sec), sous une pression P égale à 1,5 bars. Le diamètre des gouttelettes varie en fonction de l'appareil aérosol employé. De manière générale, le diamètre des gouttelettes est compris entre 150 nm et 600 microns.

Conformément à l'étape d) du procédé de préparation selon l'invention, on procède au séchage desdites gouttelettes grâce à l'outil aérosol. Ce séchage est réalisé par le transport desdites gouttelettes via le gaz vecteur, le mélange O₂/N₂, dans des tubes en PVC, ce qui conduit à l'évaporation progressive de la solution, par exemple de la solution aquo-organique obtenue au cours de l'étape b) du procédé de préparation selon l'invention, et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre de la seconde. Les particules sont alors récoltées sur un filtre. Une pompe placée en fin de circuit favorise l'acheminement des espèces dans le dispositif expérimental aérosol. Le séchage des gouttelettes selon l'étape d) du procédé selon l'invention est avantageusement suivi d'un passage à l'étuve à une température comprise entre 50 et 150°C.

Conformément à l'étape g) du procédé de préparation selon l'invention, l'élimination d'au moins dudit agent structurant et d'au moins dudit tensioactif, afin d'obtenir le matériau inorganique à porosité hiérarchisée est avantageusement réalisée par des procédés d'extraction chimique ou par traitement thermique et de préférence par calcination sous air dans une gamme de température de 300 à 1000°C et plus précisément dans une gamme de 400 à 600°C pendant une durée de 1 à 24 heures et de façon préférée pendant une durée de 2 à 12 heures.

Conformément au procédé de préparation selon l'invention, au moins un précurseur d'au moins un élément Y choisi parmi l'aluminium, le fer, le bore, l'indium et le gallium, de préférence l'aluminium, est avantageusement introduit à un ou plusieurs stades ultérieurs à ladite étape a) du procédé de préparation.
Selon un premier mode, au moins un précurseur d'au moins un élément Y est introduit pour la mise en oeuvre de ladite étape b) du procédé de préparation de l'invention. Ainsi, le mélange en solution d'au moins un tensioactif, d'au moins ladite solution obtenue selon l'étape a) et d'au moins lesdites particules métalliques ou leurs précurseurs est réalisé en présence d'au moins un précurseur dudit élément Y choisi parmi les précurseurs dudit élément Y cité ci-dessus, de préférence parmi les précurseurs aluminiques, décrits plus haut dans la présente description pour la mise en oeuvre de ladite étape a) du procédé de préparation de l'invention. Conformément audit premier mode, la préparation de la solution selon l'étape a) du procédé de l'invention est réalisée soit en présence soit en l'absence d'au moins un précurseur d'au moins un élément Y.

Selon un deuxième mode, au moins un précurseur d'au moins un élément Y est introduit de manière subséquente à la mise en oeuvre de ladite étape d) et/ou de manière subséquente à la mise en oeuvre de ladite étape g) du procédé de l'invention, en vue de produire une modification de surface du matériau obtenu selon le procédé de préparation de l'invention. Conformément audit deuxième mode, ledit précurseur d'au moins un élément Y, de préférence un précurseur aluminique, est introduit de manière subséquente à la mise en oeuvre de ladite étape d) et/ou de manière subséquente à la mise en oeuvre de ladite étape g) du procédé de l'invention par toute technique de modification de surface bien connue de l'Homme du métier telle que le greffage d'au moins un précurseur d'au moins un élément Y, l'imprégnation à sec d'au moins un précurseur d'au moins un élément Y et l'imprégnation en excès d'au moins un précurseur d'au moins un élément Y. Ledit précurseur d'au moins un élément Y, de préférence un précurseur aluminique, introduit selon ledit deuxième mode par une technique de modification de surface, est choisi parmi les précurseurs dudit élément Y, de préférence parmi les précurseurs aluminiques, décrits plus haut dans la présente description additionnés du précurseur aluminate de sodium, pour la mise en oeuvre de ladite étape a) du procédé de l'invention. Conformément audit deuxième mode, l'étape a) du procédé de l'invention est réalisée en présence ou en l'absence d'au moins un précurseur d'au moins un élément Y, de préférence un précurseur aluminique, et l'étape b) du procédé de l'invention est réalisée en présence ou en l'absence d'au moins un précurseur d'au moins un élément Y, de préférence un précurseur aluminique.

Conformément au procédé de préparation selon l'invention, ledit premier mode et ledit deuxième mode d'introduction d'au moins un précurseur d'au moins un élément Y ne sont que des variantes facultatives du procédé de préparation selon l'invention. Aussi, lorsque la matrice à base d'oxyde de silicium présente dans chacune des particules sphériques du matériau obtenu selon le procédé de préparation de l'invention comporte un élément Y, de préférence de l'aluminium, ledit élément Y est introduit soit au cours de ladite étape a) du procédé de préparation de l'invention, soit au cours de ladite étape b) conformément audit premier mode soit encore de manière subséquente à la mise en oeuvre de ladite étape d) et/ou de manière subséquente à la mise en oeuvre de ladite étape g) du procédé de préparation selon l'invention conformément audit deuxième mode. L'élément Y, de préférence l'aluminium, peut également avantageusement être introduit, plusieurs fois, à différentes étapes selon toutes les combinaisons possibles des modes décrits ci-dessus. En particulier, il est avantageux d'introduire l'aluminium au cours de ladite étape a) et de ladite étape b) ou au cours de ladite étape a) et de manière subséquente à la mise en oeuvre de ladite étape d) et/ou de manière subséquente à la mise en oeuvre de ladite étape g).

Dans le cas particulier où l'élément Y est l'aluminium, l'aluminosilicate obtenu selon le procédé de préparation selon l'invention présente alors un rapport molaire Si/Al défini à partir de la quantité en élément silicium introduite lors de l'étape a) du procédé de préparation selon l'invention et de la quantité totale en élément aluminium introduite dans la ou les étape(s) du procédé de préparation de l'invention selon les différents modes décrits ci-dessus. Dans ces conditions et de manière préférée, la valeur du rapport molaire Si/Al est au moins égale à 0,02, de préférence compris entre 0,1 et 1000 et de manière très préférée compris entre 1 et 100.

Lorsque ledit premier mode est appliqué (Y introduit pour la mise en oeuvre de ladite étape b), les quantités de matière organique et inorganique à introduire pour la mise en oeuvre de l'étape b) sont à ajuster en fonction de la quantité de matière supplémentaire en élément Y, de préférence en aluminium, introduite au cours de ladite étape b), de manière à ce que la quantité totale de matière organique et inorganique introduite dans le procédé de préparation selon l'invention permette un phénomène de micellisation conduisant à la mésotructuration de la matrice de chaque particule du matériau préparé selon le procédé de l'invention (rapport V_{inorganique}/V_{organique} compris entre 0,29 et 0,50 et de préférence entre 0,30 et 0,40).
Selon ledit premier mode de réalisation préférée du procédé selon l'invention, appelé procédé secondaire selon l'invention, on procède à la suite de ladite étape d) à une étape e) consistant à pratiquer l'autoclavage des particules issues de ladite étape d) puis on procède à une étape f) consistant à pratiquer le séchage desdites particules obtenues à l'issue de ladite e). Ladite étape f) est ensuite suivie de la mise en oeuvre de ladite étape g) d'élimination d'au moins dudit agent structurant et d'au moins dudit tensioactif. L'étape e) consiste à placer lesdites particules issues de ladite étape d) dans une enceinte fermée en présence d'un solvant à une température donnée de façon à travailler en pression autogène inhérente aux conditions opératoires choisies. Le solvant utilisé est avantageusement un solvant polaire protique. De préférence le solvant utilisé est de l'eau. Le volume de solvant introduit est défini par rapport au volume de l'autoclave choisi, de la masse de poudre sèche introduite et de la température de traitement. Ainsi le volume de solvant introduit est compris dans une gamme de 0,01 à 20% par rapport au volume de l'autoclave choisi, de préférence dans une gamme de 0,05 à 5% et de façon plus préférée dans une gamme de 0,05 à 1%. La température d'autoclavage est comprise entre 50 et 200°C, de préférence comprise entre 60 et 170°C et de manière encore préférentielle comprise entre 60 et 120°C de façon à permettre la croissance d'entités zéolithiques dans les parois de la matrice de chacune des particules du matériau cristallisé obtenu selon le procédé secondaire de l'invention. L'autoclavage est maintenu sur une période de 1 à 96 heures et de préférence sur une période de 10 à 72 heures. Conformément à l'étape f) dudit procédé secondaire selon l'invention, le séchage des particules après autoclavage de l'étape e) est avantageusement réalisé par une mise à l'étuve à une température comprise entre 50 et 150°C.

Dans le cas où lesdites particules métalliques, piégées dans la matrice comprise dans chacune desdites particules sphériques du matériau préparé selon le procédé de l'invention, se présentent sous la forme de polyoxométallate de formule (XₓMₘO_{y}Hₕ)^{q-} (I), préférentiellement sous la forme d'hétéropolyanions, le procédé de préparation selon l'invention comprend avantageusement, à la suite de la mise en oeuvre de ladite étape g), une étape h) consistant à régénérer lesdites particules métalliques sous forme de polyoxométallate éventuellement décomposées au cours de l'étape g). Ladite étape h) de régénération est préférentiellement réalisée par lavage du solide issu de ladite étape g) avec un solvant polaire en utilisant un extracteur de Soxhlet. Le fonctionnement de ce type d'extracteur est bien connu de l'Homme du métier. De manière préférée, le solvant d'extraction est un alcool, de l'acétonitrile, de l'eau, de préférence un alcool et de manière très préférée le méthanol. Ladite étape h) est réalisée pendant une durée de 1 à 24 heures, préférentiellement de 1 à 8 heures. Ladite étape de régénération h) est mise en oeuvre lorsque lesdites particules métalliques sous forme de polyoxométallate sont décomposées au cours de ladite étape g). La décomposition desdites particules métalliques est mise en évidence par spectroscopie Raman qui permet de détecter la présence ou l'absence desdites particules métalliques sous forme de polyoxométallates, de préférence sous forme d'hétéropolyanions, en fonction des bandes apparaissant sur le spectre Raman. La décomposition desdites particules métalliques, suite à la mise en oeuvre de ladite étape g), peut être partielle ou totale. Ladite étape h) est une étape de régénération partielle ou totale desdits polyoxométallates.

Ladite étape h) est suivie d'une étape de séchage i) laquelle est avantageusement réalisée à une température comprise entre 40 et 100°C et très avantageusement comprise entre 40 et 85°C. Ladite étape i) est réalisée pendant une durée comprise entre 12 et 48 heures.

Le procédé selon l'invention comprend avantageusement au moins une étape de mise en forme réalisée préférentiellement à la suite de ladite étape d) ou de ladite étape g) dans le cas où le matériau inorganique est préparé selon le procédé principal selon l'invention ou encore à la suite de ladite étape f) ou de ladite étape g) dans le cas où le matériau inorganique est préparé selon le procédé secondaire selon l'invention. L'opération de mise en forme du matériau inorganique issu de l'une des étapes d) ou g) s'il est préparé selon ledit procédé principal selon l'invention ou issu de l'une des étapes f) ou g) s'il est préparé selon le procédé secondaire selon l'invention consiste à mélanger ledit matériau avec au moins un matériau oxyde poreux ayant le rôle de liant. Ledit matériau oxyde poreux est préférentiellement un matériau oxyde poreux choisi dans le groupe formé par l'alumine, la silice, la silice-alumine, la magnésie, les argiles, l'oxyde de titane, l'oxyde de zirconium, l'oxyde de lanthane, l'oxyde de cérium, les phosphates d'aluminium, les phosphates de bore et un mélange d'au moins deux des oxydes cités ci-dessus. Ledit matériau oxyde poreux peut également être choisi parmi les mélanges alumine-oxyde de bore, alumine-oxyde de titane, alumine-zircone et oxyde de titane-zircone. Les aluminates, par exemple les aluminates de magnésium, de calcium, de baryum, de manganèse, de fer, de cobalt, de nickel, de cuivre et de zinc, ainsi que les aluminates mixtes, par exemple ceux contenant au moins deux des métaux cités ci-dessus, sont avantageusement utilisés comme matériau oxyde poreux. On peut utiliser également les titanates, par exemple les titanates de zinc, nickel, cobalt. On peut aussi avantageusement employer des mélanges d'alumine et de silice et des mélanges d'alumine avec d'autres composés comme les éléments du groupe VIB, le phosphore, le fluor ou le bore. Il est encore possible d'employer des argiles simples, synthétiques ou naturelles de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. On peut aussi avantageusement utiliser des mélanges d'alumine et d'argile et des mélanges de silice-alumine et d'argile. De même, il peut être envisagé d'utiliser comme liant au moins un composé choisi dans le groupe formé par la famille des tamis moléculaires de type aluminosilicate cristallisé et des zéolithes synthétiques et naturelles telles que la zéolithe Y, la zéolithe Y fluorée, la zéolithe Y contenant des terres rares, la zéolithe X, la zéolithe L, la zéolithe bêta, la mordénite à petits pores, la mordénite à grands pores, les zéolithes oméga, NU-10, ZSM-22, NU-86, NU-87, NU-88, et la zéolite ZSM-5. Parmi les zéolithes on préfère habituellement employer des zéolithes dont le rapport atome de charpente silicium/aluminium (Si/Al) est supérieur à environ 3/1. On emploie avantageusement des zéolithes de structure faujasite et en particulier les zéolithes Y stabilisées et ultrastabilisées (USY) soit sous forme au moins partiellement échangées avec des cations métalliques, par exemple des cations des métaux alcalino-terreux et/ou des cations de métaux de terres rares de numéro atomique 57 à 71 inclus, soit sous forme hydrogène (Atlas of zeolite framework types, 6th revised Edition, 2007, Ch. Baerlocher, L. B. McCusker, D. H. Olson). Enfin, on peut utiliser comme matériau oxyde poreux au moins un composé choisi dans le groupe formé par la famille des tamis moléculaires de type aluminosilicate non cristallisé tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt). Les divers mélanges utilisant au moins deux des composés cités ci-dessus conviennent également pour assurer le rôle de liant.

Le matériau inorganique obtenu à l'issue de l'opération de mise en forme se présente avantageusement sous forme de poudre, de billes, de pastilles, de granulés, ou d'extrudés (cylindres creux ou non, cylindres multilobés à 2, 3, 4 ou 5 lobes par exemple, cylindres torsadés), d'anneaux, etc., ces opérations de mise en forme étant réalisées par les techniques classiques connues de l'Homme du métier. De préférence, le matériau inorganique obtenu selon le procédé de l'invention se présente sous forme de poudre, laquelle est constituée de particules sphériques élémentaires ayant un diamètre maximal de 200 µm.

Selon un deuxième mode de réalisation préférée du procédé de préparation selon l'invention, indépendant ou non dudit premier mode de réalisation et des différentes variantes décrites ci-dessus, un ou plusieurs élément(s) additionnel(s) est introduit dans le mélange selon ladite étape b) du procédé de préparation selon l'invention, et/ou par imprégnation du matériau issu de ladite g) avec une solution contenant au moins ledit élément additionnel et/ou par imprégnation du matériau issu de ladite i) avec une solution contenant au moins ledit élément additionnel et/ou par imprégnation du matériau inorganique, préparé et mis en forme selon le procédé de l'invention, avec une solution contenant au moins ledit élément additionnel. Ledit élément additionnel est choisi parmi les métaux du groupe VIII de la classification périodique des éléments, des agents organiques et des espèces dopantes appartenant à la liste des éléments dopants constitués par le phosphore, le fluor, le silicium et le bore et leur mélange. Conformément audit deuxième mode de réalisation du procédé de préparation selon l'invention, un ou plusieurs élément(s) additionnel(s) tels que définis ci-dessus est(sont) introduit(s) au cours de la mise en oeuvre du procédé de préparation selon l'invention en une ou plusieurs étapes. Dans le cas où ledit élément additionnel est introduit par imprégnation, la méthode d'imprégnation à sec est préférée. Chaque étape d'imprégnation est avantageusement suivie d'une étape de séchage, par exemple réalisée à une température comprise entre 90 et 200°C, ladite étape de séchage étant préférentiellement suivie d'une étape de calcination sous air, éventuellement enrichi en oxygène, par exemple réalisée à une température comprise entre 200 et 600°C, de préférence entre 300 et 500°C, pendant une durée comprise entre 1 et 12 heures, préférentiellement entre 2 et 6 heures. Les techniques d'imprégnation, notamment d'imprégnation à sec, d'un matériau solide avec une solution liquide sont bien connues de l'Homme du métier. Les espèces dopantes choisies parmi le phosphore, le fluor, le silicium et le bore ne présentent, en elles-mêmes, aucun caractère catalytique mais permettent d'accroître l'activité catalytique du(es) métal(ux) présent(s) dans lesdites particules métalliques, notamment lorsque le matériau se trouve sous forme sulfure.

Les sources de métaux du groupe VIII utilisées en tant que précurseurs dudit élément additionnel à base d'au moins un métal du groupe VIII sont bien connues de l'Homme du métier. Parmi les métaux du groupe VIII, le cobalt et le nickel sont préférés. Par exemple, on utilisera les nitrates tels que le nitrate de cobalt et le nitrate de nickel, les sulfates, les hydroxydes tels que les hydroxydes de cobalt et les hydroxydes de nickel, les phosphates, les halogénures (par exemple, chlorures, bromures et fluorures) et les carboxylates (par exemple acétates et carbonates). Selon le mode de réalisation particulier dans lequel lesdites particules métalliques sont des nanoparticules oxydes, ladite source de métal du groupe VIII est utilisée en tant que deuxième précurseur monométallique dans ladite étape b) du procédé de préparation selon l'invention. Plus particulièrement, au moins ledit premier précurseur métallique, de préférence au moins ledit premier précurseur monométallique, à base d'un métal choisi parmi le vanadium, le niobium, le tantale, le molybdène et le tungstène et au moins ledit deuxième précurseur monométallique à base d'un métal du groupe VIII préférentiellement choisi parmi le nickel et le cobalt sont mis en solution préalablement à la mise en oeuvre de ladite étape b), ladite solution étant ensuite introduite dans le mélange selon ladite étape b) du procédé de préparation selon l'invention. De manière avantageuse, on utilise un premier précurseur monométallique à base de molybdène, par exemple MoCl₅, ou de tungstène, par exemple WCl₄, et un deuxième précurseur monométallique à base de nickel ou de cobalt, par exemple Ni(OH)₂ ou Co(OH)₂.

La source de bore utilisée en tant que précurseur de ladite espèce dopante à base de bore est de préférence choisie parmi les acides contenant du bore, par exemple l'acide orthoborique H₃BO₃, le biborate d'ammonium, le pentaborate d'ammonium, l'oxyde de bore et les esters boriques. Lorsque les particules métalliques se présentent sous la forme d'hétéropolyanions tels que décrits plus haut dans la présente description, le bore peut également être introduit en même temps que un ou plusieurs des éléments M choisi dans la liste donnée ci-dessus (M = vanadium, niobium, tantale, molybdène, tungstène, fer, le cuivre, zinc, cobalt et/ou nickel) sous la forme d'hétéropolyanions (X = bore dans la formule XₓMₘO_{y}Hₕ^{q-}), notamment d'hétéropolyanions de Keggin, Keggin lacunaire, Keggin substitué. On peut en particulier citer les hétéropolyanions suivants : l'acide boromolybdique et ses sels, l'acide borotungstique et ses sels. La source de bore sous forme d'hétéropolyanions est alors introduite lors de l'étape b) du procédé de préparation selon l'invention. Dans le cas où la source de bore est introduite par imprégnation, ladite étape d'imprégnation avec la source de bore est réalisée en utilisant par exemple une solution d'acide borique dans un mélange eau/alcool ou encore dans un mélange eau/éthanolamine. La source de bore peut également être imprégnée en utilisant un mélange formé d'acide borique, d'eau oxygénée et d'un composé organique basique contenant de l'azote tels que l'ammoniaque, les amines primaires et secondaires, les amines cycliques, les composés de la famille de la pyridine et des quinoléines et les composés de la famille du pyrrole.

La source de phosphore utilisée en tant que précurseur de ladite espèce dopante à base de phosphore est de préférence choisie parmi l'acide orthophosphorique H₃PO₄, ses sels et esters comme les phosphates d'ammonium. Lorsque les particules métalliques se présentent sous la forme d'hétéropolyanions tels que décrits plus haut dans la présente description, le phosphore peut également être introduit en même temps que un ou plusieurs des éléments M choisi dans la liste donnée ci-dessus (M = vanadium, niobium, tantale, molybdène, tungstène, fer, le cuivre, zinc, cobalt et/ou nickel) sous la forme d'hétéropolyanions (X = P dans la formule XₓMₘO_{y}Hₕ^{q-}), notamment d'hétéropolyanions de Keggin, Keggin lacunaire, Keggin substitué ou de type Strandberg. On peut citer en particulier les hétéropolyanions suivants : l'acide phosphomolybdique et ses sels, l'acide phosphotungstique et ses sels. La source de phosphore sous forme d'hétéropolyanions est alors introduite lors de l'étape b) du procédé de préparation selon l'invention. Dans le cas où la source de phosphore est introduite par imprégnation, ladite étape d'imprégnation avec la source de phosphore est réalisée en utilisant par exemple un mélange formé d'acide phosphorique et d'un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées en tant que précurseurs de ladite espèce dopante à base de silicium. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂SiF₆ ou le fluorosilicate de sodium Na₂SiF₆. Lorsque les particules métalliques se présentent sous la forme d'hétéropolyanions tels que décrits plus haut dans la présente description, le silicium peut également être introduit en même temps que un ou plusieurs des éléments M choisi dans la liste donnée ci-dessus (M = vanadium, niobium, tantale, molybdène, tungstène, fer, le cuivre, zinc, cobalt et/ou nickel) sous la forme d'hétéropolyanions (X = Si dans la formule XₓMₘO_{y}Hₕ^{q-}), notamment d'hétéropolyanions de Keggin, Keggin lacunaire, Keggin substitué. On peut citer en particulier les hétéropolyanions suivants : l'acide silicomolybdique et ses sels, l'acide silicotungstique et ses sels. La source de silicium sous forme d'hétéropolyanions est alors introduite lors de l'étape b) du procédé de préparation selon l'invention. Dans le cas où la source de silicium est introduite par imprégnation, ladite étape d'imprégnation avec la source de silicium est réalisée en utilisant par exemple une solution de silicate d'éthyle dans un mélange eau/alcool. La source de silicium peut encore être imprégnée en utilisant un composé du silicium de type silicone ou l'acide silicique mis en suspension dans l'eau.

Les sources de fluor utilisées en tant que précurseurs de ladite espèce dopante à base de fluor sont bien connues de l'Homme du métier. Par exemple, les anions fluorures peuvent être introduits sous forme d'acide fluorhydrique ou de ses sels. Ces sels sont formés avec des métaux alcalins, l'ammonium ou un composé organique. Ils sont par exemple introduits au cours de l'étape b) du procédé de préparation selon l'invention. Dans le cas où la source de fluor est introduite par imprégnation, ladite étape d'imprégnation avec la source de fluor est réalisée en utilisant par exemple une solution aqueuse d'acide fluorhydrique ou de fluorure d'ammonium ou encore de bifluorure d'ammonium.

La répartition et la localisation desdites espèces dopantes choisies parmi le bore, le fluor, le silicium et le phosphore sont avantageusement déterminées par des techniques telles que la microsonde de Castaing (profil de répartition des divers éléments), la microscopie électronique par transmission couplée à une analyse X (c'est-à-dire une analyse EDX laquelle permet de connaître la composition élémentaire qualitative et/ou quantitative d'un échantillon à partir de la mesure par une diode Si(Li) des énergies des photons X émis par la région de l'échantillon bombardée par le faisceau d'électrons) des éléments présents dans le matériau inorganique préparé selon le procédé selon l'invention, ou bien encore par l'établissement d'une cartographie de répartition des éléments présents dans ledit matériau par microsonde électronique. Ces techniques permettent de mettre en évidence la présence de ces espèces dopantes. L'analyse des métaux du groupe VIII et celle de l'espèce organique comme élément additionnel sont généralement réalisées par analyse élémentaire par fluorescence X.

Ladite espèce dopante appartenant à la liste des éléments dopants constitués par le phosphore, le fluor, le silicium, le bore et le mélange de ces éléments est introduite dans une quantité telle que la teneur totale en espèce dopante soit comprise entre 0,1 et 10% poids, de préférence entre 0,5 et 8% poids, et de manière encore plus préférée entre 0,5 et 6% poids, exprimé en % poids oxyde, par rapport au poids du matériau inorganique préparé selon le procédé selon l'invention. Cette teneur est totale, c'est-à-dire qu'elle prend en compte la présence de l'élément constituant l'espèce dopante à la fois en tant qu'élément X dans les particules polyoxométallates, notamment sous la forme d'hétéropolyanions, et en tant qu'espèce dopante. C'est le cas en particulier pour les éléments P, Si et B. Le rapport atomique entre l'espèce dopante et le(s) élément(s) choisi(s) parmi V, Nb, Ta, Mo et W est de préférence choisi entre 0,05 et 0,9, de manière encore plus préférée entre 0,08 et 0,8, l'espèce dopante et le(s) élément(s) choisi(s) parmi V, Nb, Ta, Mo et W pris en compte pour le calcul de ce rapport correspondant à la teneur totale, dans le matériau préparé selon le procédé selon l'invention, en phosphore et en élément(s) choisi(s) parmi V, Nb, Ta, Mo et W indépendamment du mode d'introduction.

Les agents organiques utilisés en tant que précurseurs dudit élément additionnel à base d'au moins un agent organique sont choisis parmi les agents organiques possédant des propriétés chélatantes ou non, réductrices ou non. Lesdits agents organiques sont par exemple les mono-, di- ou polyalcools éventuellement éthérifiés, les acides carboxyliques, les sucres, les mono, di ou polysaccharides non cycliques comme le glucose, le fructose, le maltose, le lactose ou le sucrose, les esters, les éthers, les éthers-couronnes, les composés contenant du soufre ou de l'azote comme l'acide nitriloacétique, l'acide ethylènediaminetetraacétique, ou diéthylenetriamine.

Selon un troisième mode de réalisation préférée du procédé de préparation selon l'invention, indépendant ou non dudit premier mode ou dudit deuxième mode de réalisation et des différentes variantes décrites ci-dessus, au moins un composé soufré est introduit dans le mélange selon ladite étape b), ou au cours de la mise en oeuvre de ladite étape g) ou encore au cours de la mise en oeuvre de ladite étape h) de manière à obtenir le matériau inorganique, au moins en partie mais pas totalement, sous forme sulfure. Ledit composé soufré est choisi parmi les composés contenant au moins un atome de soufre et dont la décomposition à basse température (80-90°C) entraîne la formation de H₂S. Par exemple, ledit composé soufré est la thiourée ou la thioacétamide. Conformément audit troisième mode de réalisation, la sulfuration dudit matériau est partielle de sorte que la présence de soufre dans ledit matériau inorganique n'affecte pas totalement la présence desdites particules métalliques.

Le matériau obtenu selon le procédé de l'invention présente avantageusement une surface spécifique comprise entre 50 et 1100 m²/g, de manière avantageuse comprise entre 50 et 600 m²/g et de manière très préférée entre 50 et 400 m²/g. Lesdites particules sphériques élémentaires constituant le matériau obtenu selon le procédé de l'invention ont un diamètre maximum égal à 200 µm, de préférence inférieur à 100 µm, variant avantageusement de 50 nm à 50 µm, très avantageusement de 50 nm à 30 µm et de manière encore plus avantageuse de 50 nm à 10 µm. Plus précisément, elles sont présentes dans le matériau obtenu selon le procédé de l'invention sous la forme d'agrégats.

Ce matériau peut-être utilisé dans un procédé de transformation d'une charge hydrocarbonée comprenant 1) la mise en contact du matériau inorganique obtenu selon le procédé de préparation selon l'invention avec une charge comprenant au moins un composé soufré puis 2) la mise en contact dudit matériau issu de ladite étape 1) avec ladite charge hydrocarbonée.
Le matériau inorganique utilisé pour la mise en oeuvre de ladite étape 1) est un matériau inorganique amorphe, partiellement cristallisé ou cristallisé selon les définitions données plus haut dans la présente description.
Conformément à ladite étape 1) du procédé de transformation on réalise la sulfuration des particules métalliques, sous forme polyoxométallates, préférentiellement sous forme d'hétéropolyanions, piégées au sein de la matrice de chacune des particules sphériques constituant le matériau inorganique préparé selon le procédé selon l'invention. La transformation desdites particules métalliques, en leur phase active sulfurée associée est réalisée après traitement en température dudit matériau inorganique obtenu selon le procédé selon l'invention au contact d'hydrogène sulfuré à une température comprise entre 200 et 600°C et plus préférentiellement entre 300 et 500°C selon des procédés bien connus de l'Homme du métier. Plus précisément, ladite étape 1) de sulfuration selon le procédé de transformation est réalisée soit directement dans l'unité réactionnelle dudit procédé de transformation à l'aide d'une charge soufrée en présence d'hydrogène et d'hydrogène sulfuré (H₂S) introduit tel quel ou issu de la décomposition d'un composé soufré organique (sulfuration *in situ*) soit préalablement au chargement dudit matériau préparé selon le procédé selon l'invention dans l'unité réactionnelle dudit procédé de transformation (sulfuration *ex situ*). Dans le cas d'une sulfuration *ex situ,* des mélanges gazeux tels que H₂/H₂S ou N₂/H₂S sont avantageusement utilisés pour la mise en oeuvre de ladite étape 1). Ledit matériau préparé selon le procédé selon l'invention peut encore être sulfuré *ex situ* conformément à ladite étape 1) à partir de molécules en phase liquide, l'agent sulfurant étant alors choisi parmi les composés suivants : le diméthyldisulfure (DMDS), le diméthylsulfure, le n-butylmercaptan, les composés polysulfures de type tertiononylpolysulfure (par exemple TPS-37 ou TPS-54 commercialisés par la société ATOFINA), ceux-ci étant dilués dans une matrice organique composée de molécules aromatiques ou alkyles. Ladite étape 1) de sulfuration est préférentiellement précédée d'une étape de traitement thermique dudit matériau inorganique préparé selon le procédé de l'invention selon des méthodes bien connues de l'Homme du métier, de préférence par calcination sous air dans une gamme de température comprise entre 300 et 1000°C et plus précisément dans une gamme comprise entre 500 et 600°C pendant une durée de 1 à 24 heures et de façon préférée pendant une durée de 6 à 15 heures.

Ladite charge hydrocarbonée soumise au procédé de transformation selon l'invention comprend des molécules contenant au moins des atomes d'hydrogène et de carbone en une teneur telle que lesdits atomes représentent au moins 80% poids, de préférence au moins 85% poids, de ladite charge. Lesdites molécules comprennent avantageusement, outre des atomes d'hydrogène et des atomes de carbone, des hétéroéléments, en particulier de l'azote, de l'oxygène et/ou du soufre.

Les différents procédés de transformation de charges hydrocarbonées dans lesquels le matériau inorganique sous forme sulfurée, issu de ladite étape 1), est avantageusement mis en oeuvre sont en particulier les procédés d'hydrotraitement, plus particulièrement les procédés d'hydrodésulfuration et d'hydrodéazotation, et les procédés d'hydroconversion, plus particulièrement d'hydrocraquage, de charges hydrocarbonées comprenant des hydrocarbures aliphatiques saturés et insaturés, des hydrocarbures aromatiques, des composés organiques oxygénés et des composés organiques contenant de l'azote et/ou du soufre ainsi que des composés organiques contenant d'autres groupes fonctionnels. Plus particulièrement, ledit matériau inorganique sous forme sulfurée, issu de ladite étape 1), est avantageusement mis en oeuvre dans des procédés d'hydrotraitement de charges hydrocarbonées de type essence et distillats moyens (gazole et kérosène) et des procédés d'hydroconversion et/ou d'hydrotraitement de coupes hydrocarbonées lourdes telles que des distillats sous vide, des huiles désalphatées, des résidus atmosphériques ou des résidus sous vide. Ledit matériau inorganique sous forme sulfurée, issu de ladite étape 1), est encore avantageusement mis en oeuvre dans un procédé d'hydrotraitement d'une charge hydrocarbonée comprenant des triglycérides.

Le matériau obtenu selon le procédé de l'invention est caractérisé par plusieurs techniques d'analyses et notamment par diffraction des rayons X aux bas angles (DRX aux bas angles), par diffraction des rayons X aux grands angles (DRX), par volumétrie à l'azote (BET), par microscopie électronique en transmission (MET) éventuellement couplée à une analyse X, par microscopie électronique à balayage (MEB), par fluorescence X (FX). La présence des particules métalliques telles que décrites plus haut dans la présente description est mise en évidence par différentes techniques, en particulier par les spectroscopies Raman, UV-visible ou encore infrarouge ainsi que par microanalyses. Des techniques telles que la résonance magnétique nucléaire (RMN) ou encore la résonance paramagnétique électronique (RPE) peuvent aussi être utilisées selon les précurseurs métalliques employés. Lorsque éventuellement au moins une espèce dopante choisie parmi le bore, le fluor, le phosphore et le silicium est introduite, les technique d'analyse de mise en évidence de ces espèces sont décrites plus haut dans la présente description.

La technique de diffraction des rayons X aux bas angles (valeurs de l'angle 2θ comprises entre 0,5 et 5°) permet de caractériser la périodicité à l'échelle nanométrique générée par la mésoporosité organisée de la matrice mésostructurée du matériau obtenu selon le procédé de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d ^{∗} sin (θ) = n ^{∗} λ. Cette indexation permet alors la détermination des paramètres de maille (abc) du réseau direct, la valeur de ces paramètres étant fonction de la structure hexagonale, cubique, ou vermiculaire obtenue.

La technique de Diffraction des Rayons X aux grands angles (valeurs de l'angle 2θ comprises entre 6 et 100°) permet de caractériser un solide cristallisé défini par la répétition d'un motif unitaire ou maille élémentaire à l'échelle moléculaire. Elle suit le même principe physique que celui régissant la technique de diffraction des Rayons X aux bas angles. La technique DRX aux grands angles est donc utilisée pour analyser les matériaux obtenus selon le procédé de l'invention car elle est tout particulièrement adaptée à la caractérisation structurale des entités zéolithiques éventuellement présentes dans les parois de la matrice de chacune des particules sphériques du matériau obtenu selon le procédé de l'invention.

La volumétrie à l'azote correspondant à l'adsorption physique de molécules d'azote dans la porosité du matériau via une augmentation progressive de la pression à température constante renseigne sur les caractéristiques texturales (diamètre de pores, volume poreux, surface spécifique) particulières du matériau obtenu selon le procédé de l'invention. En particulier, elle permet d'accéder à la surface spécifique et à la distribution mésoporeuse du matériau. On entend par surface spécifique, la surface spécifique BET (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309. La distribution poreuse représentative d'une population de mésopores centrée dans une gamme de 2 à 50 nm (classification IUPAC) est déterminée par le modèle Barrett-Joyner-Halenda (BJH). L'isotherme d'adsorption - désorption d'azote selon le modèle BJH ainsi obtenue est décrite dans le périodique "The Journal of American Society", 1951, 73, 373, écrit par E. P. Barrett, L. G. Joyner et P. P. Halenda. Dans l'exposé qui suit, le diamètre des mésospores φ de la matrice mésostructurée correspond à la valeur du diamètre maximum lu sur la courbe de distribution de taille de pores obtenue à partir de la branche d'adsorption de l'isotherme azote. De plus, l'allure de l'isotherme d'adsorption d'azote et de la boucle d'hystérésis peuvent renseigner sur la nature de la mésoporosité et sur la présence de la microporosité du matériau obtenu selon le procédé de l'invention. L'analyse quantitative de la microporosité du matériau obtenu selon le procédé de l'invention est effectuée à partir des méthodes "t" (méthode de Lippens-De Boer, 1965) ou "αₛ" (méthode proposée par Sing) qui correspondent à des transformées de l'isotherme d'adsorption de départ comme décrit dans l'ouvrage "Adsorption by powders and porous solids. Principles, methodology and applications" écrit par F. Rouquerol, J. Rouquerol et K. Sing, Academic Press, 1999. Ces méthodes permettent d'accéder en particulier à la valeur du volume microporeux caractéristique de la microporosité du matériau obtenu selon le procédé de l'invention.

Concernant la matrice mésostructurée, la différence entre la valeur du diamètre des mésopores φ et le paramètre de maille a défini par DRX aux bas angles comme décrit ci-dessus permet d'accéder à la grandeur e où e = a - φ et est caractéristique de l'épaisseur des parois de la matrice mésostructurée comprises dans chacune des particules sphériques du matériau obtenu selon le procédé de l'invention. Ledit paramètre de maille a est relié à la distance d de corrélation entre pores par un facteur géométrique caractéristique de la géométrie de la phase. Pour exemple, dans le cas d'une structure vermiculaire e = d - φ.

L'analyse par microscopie électronique en transmission (MET) est une technique également utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 1 nm. Dans l'exposé qui suit, les photos MET sont réalisées à partir de coupes microtomes de l'échantillon afin de visualiser une section d'une particule sphérique élémentaire du matériau obtenu selon le procédé de l'invention. L'analyse de l'image permet également d'accéder aux paramètres d, φ et e, caractéristiques de la matrice mésostructurée définis précédemment.

La morphologie et la distribution en taille des particules élémentaires ont été établies par analyse de photos obtenues par microscopie électronique à balayage (MEB).

Les particules métalliques, sous forme de polyoxométallates, plus préférentiellement sous forme d'hétéropolyanions (HPA), telles que décrites plus haut dans la présente description sont en particulier caractérisées par spectroscopie Raman. Les spectres Raman ont été obtenus avec un spectromètre de type Raman dispersif équipé d'un laser de longueur d'onde excitatrice de 532 nm. Le faisceau laser est focalisé sur l'échantillon à l'aide d'un microscope équipé d'un objectif × 50 longue distance de travail. La puissance du laser au niveau de l'échantillon est de l'ordre de 1 mW. Le signal Raman émis par l'échantillon est collecté par le même objectif et est dispersé à l'aide d'un réseau 1800 tr/min puis collecté par un détecteur CCD (charge coupled device ou dispositif à transfert de charges). La résolution spectrale obtenue est de l'ordre de 2 cm⁻¹. La zone spectrale enregistrée est comprise entre 300 et 1500 cm⁻¹. La durée d'acquisition a été fixée à 120 s pour chaque spectre Raman enregistré.

La spectroscopie par résonance magnétique nucléaire (RMN) est également avantageusement utilisée pour caractériser les particules métalliques sous forme de polyoxométallates, en particulier sous forme de HPA. Citons notamment les analyses RMN du ³¹P et du ²⁹Si enregistrées sur des spectromètres 300 ou 400 MHz. La spectroscopie par résonance magnétique nucléaire (RMN), en particulier la RMN du ⁹⁵Mo et du ¹⁸³W, est également avantageusement utilisée pour caractériser les nanoparticules métalliques oxydes décrites plus haut dans la présente description.

L'invention est illustrée au moyen des exemples qui suivent.

### Exemples

Dans les exemples qui suivent, la technique aérosol utilisée est celle décrite ci-dessus dans l'exposé de l'invention : on utilise un générateur d'aérosol de modèle 9306 A ayant un atomiseur 6 jets fourni par TSI. Le spectromètre Raman dispersif utilisé est un appareil commercial LabRAM Aramis fourni par la société Horiba Jobin-Yvon. Le laser utilisé possède une longueur d'onde excitatrice de 532 nm. Le fonctionnement de ce spectrographe, pour la réalisation des exemples 1 à 5 qui suivent, a été décrit ci-dessus.

Pour chacun des exemples 1 à 5 ci-dessous, on calcule le rapport V_{inorganique}/V_{organique} du mélange issu de l'étape b) et contenant les particules métalliques ou leurs précurseurs, les précurseurs des entités (proto)-zéolithiques et le tensioactif (P123 ou F127). Ce rapport est défini comme suit : V_{inorganiqu}/V_{organique} = ∑ᵢ(m_{inorg i} / ρ_{inorg i}) / ∑ⱼ(_{morg j} / ρ_{org j}) avec i variant de 1 au nombre total de précurseurs inorganiques et j variant de 1 au nombre total de tensioactif et d'agent structurant et où m_{inorg i} est la masse de l'oxyde associé au précurseur inorganique i condensé dans la particule élémentaire solide obtenue par atomisation, m_{org j} est la masse du tensioactif ou de l'agent structurant j non volatile se retrouvant dans la particule élémentaire solide obtenue par atomisation et ρ_{org j} et ρ_{inorg i} sont les densités respectivement associées à chacun des composés organiques non volatiles j et inorganiques i. La densité de l'oxyde associé au précurseur inorganique i est égale à la densité de l'oxyde cristallisé correspondant diminuée de 15%. Pour les exemples qui suivent, ∑ᵢ(m_{inorg i} / ρ_{inorg i}) correspond généralement à la somme des rapports des masse des oxydes MoO₃, CoO, NiO et/ou P₂O₅ additionnée des masses de SiO₂ et de Al₂O₃ sur leur densité respective. De même, ∑ⱼ(m_{org j} / ρ_{org j}) correspond généralement à la somme des rapports de la masse de l'agent structurant, c'est-à-dire TPAOH dans les exemples 1 à 5, additionnée de la masse du tensioactif, c'est-à-dire le tensioactif P123 ou F127 dans les exemples 1 à 5, sur leur densité respective. Le solvant polaire, l'éthanol dans les exemples 1 à 5, ainsi que l'eau n'entrent pas en compte dans le calcul dudit rapport V_{inorganique}/V_{organique}.

Exemple 1 (invention) : préparation d'un matériau présentant des HPA de type Strandberg H₂P₂Mo₅O₂₃⁴⁻, 2Co²⁺, à 10% en poids de MoO₃, 2,08% en poids de CoO et 1,97% poids de P₂O₅ par rapport au matériau final. La matrice oxyde présente une porosité hiérarchisée dans les domaines de la microporosité et de la mésoporosité et organisée dans le domaine de la mésoporosité, avec des parois amorphes microporeuses constituées d'entités proto-zéolithiques aluminosilicates de type ZSM-5 (MFI) telles que le rapport molaire Si/Al = 12.

Une solution aqueuse contenant 3,61 mol/l en MoO₃, 1,44 mol/l de H₃PO₄, 1,44 mol/l de Co(OH)₂ est préparée sous agitation à température ambiante. L'analyse Raman, effectuée sur le matériau final, révèle la présence de
l'HPA de Strandberg H₂P₂Mo₅O₂₃⁴⁻, 2Co²⁺, comme espèce majoritaire. 0,44 g de tri-sec-butoxyde d'aluminium sont mélangés à 2,17 g de solution aqueuse de TPAOH (40% poids). Après 10 minutes d'agitation à température ambiante, 22,4 g d'eau permutée sont ajoutés. Après homogénéisation, 4,43 g de TEOS sont ajoutés puis laissés à hydrolyser pendant 16 h sous agitation à température ambiante. A l'issue de l'hydrolyse, la solution est diluée avec une solution contenant 1,46 g de P123 (Siglma-Aldrich), 45,5 g d'eau permutée et 5,79 g d'éthanol. Une solution composée de 10,0 g d'eau permutée, 0,33 ml de la solution aqueuse de Strandberg H₂P₂Mo₅O₂₃⁴⁻, 2Co²⁺, à 0,72 mol/l en HPA ainsi que 0,22 g de thiourée est préparée. Après 5 min d'agitation, cette solution est ajoutée à la solution contenjant le P123. Le rapport V_{inorganique}/V_{organique} du mélange est égal à 0,32 et est calculé comme décrit ci-dessus. Le mélange est laissé sous agitation pendant 30 minutes puis est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. La poudre est ensuite calcinée sous air pendant 5 h à 550°C. L'HPA est ensuite régénéré par lavage au Soxhlet du solide par du méthanol pendant 4 heures. Le matériau est finalement séché à 80°C pendant 24 heures. Le solide est caractérisé par DRX aux bas angles, par volumétrie à l'azote, par MET, par MEB, par FX et par spectroscopie Raman. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,03 ml/g, une valeur du volume mésoporeux V_{méso} (N₂) de 0,43 ml/g et une surface spécifique du matériau final de S = 217 m²/g. Le diamètre mésoporeux φ caractéristique de la matrice mésostructurée est de 8,3 nm. L'analyse DRX aux petits angles conduit à la visualisation d'un pic de corrélation à l'angle 2θ = 0,84°. La relation de Bragg 2 d ^{∗} sin (0,42) = 1,5406 permet de calculer la distance d de corrélation entre les mésopores organisés du matériau, soit d = 10,5 nm. L'épaisseur des parois du matériau mésostructuré définie par e = d - φ est donc de e = 2,2 nm. Le rapport molaire Si/Al obtenu par FX est de 12. Un cliché MEB des particules élémentaires sphériques ainsi obtenues indique que ces particules ont une taille caractérisée par un diamètre variant de 50 nm à 30 µm, la distribution en taille de ces particules étant centrée autour de 15 µm. Le spectre Raman du matériau final révèle la présence de l'HPA de Strandberg H₂P₂Mo₅O₂₃⁴⁻ avec une bande caractéristique de cet hétéropolyanion à 941 cm⁻¹ et des bandes secondaires à 892, 394 et 369 cm⁻¹.

Exemple 2 (invention) : préparation d'un matériau présentant des HPA de type Strandberg H₂P₂Mo₅O₂₃⁴⁻, 2Co²⁺, à 5% en poids de MoO₃, 1,04% en poids de NiO et 0,99 % en poids de P₂O₅ par rapport au matériau final. La matrice oxyde présente une porosité hiérarchisée dans les domaines de la microporosité et de la mésoporosité et organisée dans le domaine de la mésoporosité, avec des parois amorphes microporeuses constituées d'entités proto-zéolithiques aluminosilicates de type ZSM-5 (MFI) telles que le rapport molaire Si/Al = 25.

Une solution aqueuse contenant 3,61 mol/l en MoO₃, 1,44 mol/l de H₃PO₄, 1,44 mol/l de Ni(OH)₂ est préparée sous agitation à température ambiante. L'analyse Raman, effectué sur le matériau final, révèle la présence de l'HPA de Strandberg H₂P₂Mo₅O₂₃⁴⁻, 2Co²⁺ comme espèce majoritaire.
0,23 g de tri-sec-butoxyde d'aluminium sont mélangés à 2,17 g de solution aqueuse de TPAOH (40% poids). Après 10 minutes d'agitation à température ambiante, 22,3 g d'eau permutée sont ajoutés. Après homogénéisation, 4,82 g de TEOS sont ajoutés puis laissés à hydrolyser pendant 16 h sous agitation à température ambiante. A l'issue de l'hydrolyse, la solution est diluée avec une solution contenant 1,45 g de P123 (Sigma-Aldrich), 45,4 g d'eau permutée et 5,78 g d'éthanol. Une solution composée de 10,0 g d'eau permutée et 0,15 ml de la solution aqueuse de HPA de Strandberg H₂P₂Mo₅O₂₃⁴⁻, 2Co²⁺ à 0,72 mol/l en HPA est préparée.

Après 5 min d'agitation, cette solution est ajoutée à la solution précédente. Le rapport V_{inorganique}/V_{organique} du mélange est égal à 0,32 et est calculé comme décrit ci-dessus. Le mélange est laissé sous agitation pendant 30 minutes puis est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. La poudre est ensuite calcinée sous air pendant 5 h à 550°C. L'HPA est ensuite régénéré par lavage au Soxhlet du solide par du méthanol pendant 4 heures. Le solide est finalement séché à 80°C pendant 24 heures. Le solide est caractérisé par DRX aux bas angles, par volumétrie à l'azote, par MET, par MEB, par FX et par spectroscopie Raman. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,05 ml/g, une valeur du volume mésoporeux V_{méso} (N₂) de 0,41 ml/g et une surface spécifique du matériau final de S = 225 m²/g. Le diamètre mésoporeux φ caractéristique de la matrice mésostructurée est de 8,7 nm. L'analyse DRX aux petits angles conduit à la visualisation d'un pic de corrélation à l'angle 2θ = 0,86°. La relation de Bragg 2 d ^{∗} sin (0,43) = 1,5406 permet de calculer la distance d de corrélation entre les mésopores organisés du matériau, soit d = 10,3 nm. L'épaisseur des parois du matériau mésostructuré définie par e = d - φ est donc de e = 1,6 nm. Le rapport molaire Si/Al obtenu par FX est de 25. Un cliché MEB des particules élémentaires sphériques ainsi obtenues indique que ces particules ont une taille caractérisée par un diamètre variant de 50 nm à 30 µm, la distribution en taille de ces particules étant centrée autour de 15 µm. Le spectre Raman du matériau final révèle la présence de l'HPA de Strandberg H₂P₂Mo₅O₂₃⁴⁻ avec une bande caractéristique de cet hétéropolyanion à 943 cm⁻¹ et des bandes secondaires à 894, 396 et 370 cm⁻¹.

Exemple 3 (invention) : préparation d'un matériau présentant des nanoparticules oxydes comprenant du molybdène et du cobalt à 5% en poids de MoO₃ et 1,04% en poids de CoO par rapport au matériau final. La matrice oxyde présente une porosité hiérarchisée dans les domaines de la microporosité et de la mésoporosité et organisée dans le domaine de la mésoporosité, avec des parois amorphes microporeuses constituées d'entités proto-zéolithiques aluminosilicates de type ZSM-5 (MFI) telles que le rapport molaire Si/Al = 12.

Une solution aqueuse contenant 0,11 mol/l de MOCl₅ et 0,08 mol/l de Co(OH)₂ est préparée sous agitation à température ambiante.
0,45 g de tri-sec-butoxyde d'aluminium sont mélangés à 2,16 g de solution aqueuse de TPAOH (40% poids). Après 10 minutes d'agitation à température ambiante, 22,3 g d'eau permutée sont ajoutés. Après homogénéisation, 4,59 g de TEOS sont ajoutés puis laissés à hydrolyser pendant 16 h sous agitation à température ambiante. A l'issue de l'hydrolyse, une solution composée de 1,58 g de F127 (Sigma-Aldrich), 45,3 g d'eau permutée et 5,77 g d'éthanol est ajoutée à la solution contenant les précurseurs des entités protzéolithiques. Après 5 min d'homogénéisation, la solution contenant le MoCl₅ et le Co(OH)₂ est ajoutée goutte à goutte. Le rapport V_{inorganique}/V_{organique} du mélange est égal à 0,30 et est calculé comme décrit ci-dessus. Le mélange est laissé sous agitation pendant 30 minutes puis est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. La poudre est ensuite calcinée sous air pendant 5 h à 550°C. Le solide est finalement séché à 80°C pendant 24 heures. Le solide est caractérisé par DRX aux bas angles, par volumétrie à l'azote, par MET, par MEB, par FX et par spectroscopie Raman. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,04 ml/g, une valeur du volume mésoporeux V_{méso} (N₂) de 0,41 ml/g et une surface spécifique du matériau final de S = 349 m²/g. Le diamètre mésoporeux φ caractéristique de la matrice mésostructurée est de 6,0 nm. L'analyse DRX aux petits angles conduit à la visualisation d'un pic de corrélation à l'angle 2θ = 0,62°. La relation de Bragg 2 d ^{∗} sin (0,31) = 1,5406 permet de calculer la distance d de corrélation entre les mésopores organisés du matériau, soit d = 14,2 nm. L'épaisseur des parois du matériau mésostructuré définie par e = d - φ est donc de e = 8,2 nm. Le rapport molaire Si/Al obtenu par FX est de 12. Un cliché MEB des particules élémentaires sphériques ainsi obtenues indique que ces particules ont une taille caractérisée par un diamètre variant de 50 nm à 30 µm, la distribution en taille de ces particules étant centrée autour de 15 µm. Le spectre Raman du matériau final révèle la présence d'espèces polymolybdates en interaction avec le support avec des bandes caractéristiques de ces espèces à 950 et 887 cm⁻¹.

Exemple 4 (invention) : préparation d'un matériau présentant nanoparticules oxydes comprenant du molybdène et du nickel à 5% en poids de MoO₃ et 1,04% en poids de NiO par rapport au matériau final. La matrice oxyde présente une porosité hiérarchisée dans les domaines de la microporosité et de la mésoporosité et organisée dans le domaine de la mésoporosité, avec des parois amorphes microporeuses constituées d'entités proto-zéolithiques aluminosilicates de type ZSM-5 (MFI) telles que le rapport molaire Si/Al = 12.

Une solution aqueuse contenant 0,11 mol/l de MoCl₅ et 0,08 mol/l de Ni(OH)₂ est préparée sous agitation à température ambiante.
0,45 g de tri-sec-butoxyde d'aluminium sont mélangés à 2,16 g de solution aqueuse de TPAOH (40% poids). Après 10 minutes d'agitation à température ambiante, 22,3 g d'eau permutée sont ajoutés. Après homogénéisation, 4,59 g de TEOS sont ajoutés puis laissés à hydrolyser pendant 16 h sous agitation à température ambiante. Une étape de vieillissement de la solution est effectuée à 80°C pendant 24 h. A l'issue de cette étape, une solution composée de 1,58 g de F127 (Sigma-Aldrich), 45,3 g d'eau permutée et 5,77 g d'éthanol est ajoutée à la solution contenant les précurseurs des entités proto-zéolithiques. Après 5 min d'homogénéisation, la solution contenant le MoCl₅ et le Ni(OH)₂ est ajoutée goutte à goutte. Le rapport V _{inorganique}/V_{organique} du mélange est égal à 0,30 et est calculé comme décrit ci-dessus. Le mélange est laissé sous agitation pendant 30 minutes puis est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. La poudre est ensuite calcinée sous air pendant 5 h à 550°C. Le solide est caractérisé par DRX aux bas angles, par volumétrie à l'azote, par MET, par MEB, par FX et par spectroscopie Raman. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,05 ml/g, une valeur du volume mésoporeux V_{méso} (N₂) de 0,43 ml/g et une surface spécifique du matériau final de S = 360 m²/g. Le diamètre mésoporeux φ caractéristique de la matrice mésostructurée est de 7,2 nm. L'analyse DRX aux petits angles conduit à la visualisation d'un pic de corrélation à l'angle 2θ = 0,62°. La relation de Bragg 2 d ^{∗} sin (0,31) = 1,5406 permet de calculer la distance d de corrélation entre les mésopores organisés du matériau, soit d = 14,0 nm. L'épaisseur des parois du matériau mésostructuré définie par e = d - φ est donc de e = 6,8 nm. Le rapport molaire Si/Al obtenu par FX est de 12. Un cliché MEB des particules élémentaires sphériques ainsi obtenues indique que ces particules ont une taille caractérisée par un diamètre variant de 50 nm à 30 µm, la distribution en taille de ces particules étant centrée autour de 15 µm. Le spectre Raman du matériau final révèle la présence d'espèces polymolybdates en interaction avec le support avec des bandes caractéristiques de ces espèces à 951 et 886 cm⁻¹.

Exemple 5 (invention) : préparation d'un matériau présentant des nanoparticules oxydes comprenant du molybdène et du nickel à 5% en poids de MoO₃ et 1,04% en poids de NiO par rapport au matériau final. La matrice oxyde présente une porosité hiérarchisée et organisée dans les domaines de la microporosité et de la mésoporosité, avec des parois cristallisées microporeuses constituées d'entités zéolithiques aluminosilicates de type ZSM-5 (MFI) telles que le rapport molaire Si/Al = 59.

Une solution aqueuse contenant 0,11 mol/l de MoCl₅ et 0,08 mol/l de Ni(OH)₂ est préparée sous agitation à température ambiante.
0,10 g de tri-sec-butoxyde d'aluminium sont mélangés à 2,16 g de solution aqueuse de TPAOH (40% poids). Après 10 minutes d'agitation à température ambiante, 22,3 g d'eau permutée sont ajoutés. Après homogénéisation, 5,01 g de TEOS sont ajoutés puis laissés à hydrolyser pendant 16 h sous agitation à température ambiante. Une étape de vieillissement de la solution est effectuée à 80°C pendant 24 h. A l'issue de cette étape, une solution composée de 1,58 g de F127 (Sigma-Aldrich), 45,3 g d'eau permutée et 5,77 g d'éthanol est ajoutée à la solution contenant les précurseurs des entités zéolithiques. Après 5 min d'homogénéisation, la solution contenant le MoCl₅ et le Ni(OH)₂ est ajoutée goutte à goutte. Le rapport V _{inorganique}/V_{organique} du mélange est égal à 0,30 et est calculé comme décrit ci-dessus. Le mélange est laissé sous agitation pendant 30 minutes puis est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. 100 mg de cette poudre est placé dans un autoclave de 1 1 en présence de 0,6 ml d'eau distillée. L'autoclave est porté à 95°C pendant 48 heures. La poudre récupérée est ensuite séchée à 100°C à l'étuve puis calcinée sous air pendant 5 h à 550°C. Le solide est caractérisé par DRX aux bas angles et aux grands angles, par volumétrie à l'azote, par MET, par MEB, par FX et par spectroscopie Raman. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,13 ml/g, une valeur du volume mésoporeux V_{méso} (N₂) de 0,33 ml/g et une surface spécifique du matériau final de S = 180 m²/g. Le diamètre mésoporeux φ caractéristique de la matrice mésostructurée est de 17 nm. L'analyse DRX aux petits angles conduit à la visualisation d'un pic de corrélation à l'angle 2θ = 1,32°. La relation de Bragg 2 d ^{∗} sin (θ) = 1,5406 permet de calculer la distance d de corrélation entre les mésopores organisés du matériau, soit d = 67 nm. L'épaisseur des parois du matériau mésostructuré définie par e = d - φ est donc de e = 50 nm. L'analyse DRX aux grands angles conduit à la visualisation de pics de diffraction aux angles 2θ = 7,9° et 8,9° caractérisant la structure cristalline MFI de la zéolithe ZSM-5. Le rapport molaire Si/Al obtenu par FX est de 59. Un cliché MEB des particules élémentaires sphériques ainsi obtenues indique que ces particules ont une taille caractérisée par un diamètre variant de 50 nm à 30 µm, la distribution en taille de ces particules étant centrée autour de 15 µm. Le spectre Raman du matériau final révèle la présence d'espèces polymolybdates en interaction avec le support avec des bandes caractéristiques de ces espèces à 952 et 887 cm⁻¹.

## Revendications

1. Procédé de préparation d'un matériau inorganique à porosité hiérarchisée dans les domaines de la microporosité et de la mésoporosité, ledit matériau étant constitué d'au moins deux particules sphériques élémentaires ayant un diamètre maximal de 200 microns, chacune desdites particules sphériques comprenant des particules métalliques présentant une taille moyenne supérieure ou égale à 0,6 nm et strictement inférieure à 1 nm, contenant au moins un ou plusieurs métaux choisis parmi le vanadium, le niobium, le tantale, le molybdène, le tungstène, le fer, le cuivre, le zinc, le cobalt et le nickel, lesdites particules métalliques étant piégées de façon homogène et uniforme au sein d'une matrice, mésostructurée, à base d'oxyde de silicium, présentant des parois microporeuses d'épaisseur comprise entre 1 et 60 nm, ladite matrice étant constituée soit intégralement d'entités proto-zéolithiques, soit intégralement d'entités zéolithiques, soit d'un mélange d'entités proto-zéolithiques et d'entités zéolithiques, ledit procédé comprenant au moins les étapes suivantes :
a) la préparation d'une solution contenant des nanocristaux zéolithiques de taille nanométrique maximale égale à 60 nm à base de silicium et/ou des éléments précurseurs d'entités proto-zéolithiques à base de silicium,
b) le mélange en solution desdites particules métalliques ou d'au moins un précurseur métallique desdites particules métalliques, d'au moins un tensioactif et d'au moins ladite solution obtenue selon a) tel que le rapport des volumes de matières inorganiques et organiques V_{inorganique}/V_{organique} est compris entre 0,29 et 0,50,
c) l'atomisation par aérosol de ladite solution obtenue à l'étape b) pour conduire à la formation de gouttelettes sphériques,
d) le séchage desdites particules,
g) l'élimination d'au moins dudit agent structurant et d'au moins dudit tensioactif,
h) la régénération desdites particules métalliques sous forme de polyoxométallate éventuellement décomposées au cours de l'étape g) par lavage du solide issu de ladite étape g) avec un solvant polaire pendant une durée de 1 à 24 heures,
i) une étape de séchage réalisée à une température comprise entre 40 et 100°C pendant une durée comprise entre 12 et 48 heures,
dans lequel lesdites particules métalliques se présentent sous la forme de polyoxométallate de formule (XₓMₘO_{y}Hₕ)^{q-} où H est l'atome d'hydrogène, O est l'atome d'oxygène, X est un élément choisi parmi le phosphore, le silicium, le bore, le nickel et le cobalt et M est un ou plusieurs éléments choisis parmi le vanadium, le niobium, le tantale, le molybdène, le tungstène, le fer, le cuivre, le zinc, le cobalt et le nickel, x étant égal à 0, 1, 2, ou 4, m étant égal à 5, 6, 7, 8, 9, 10, 11, 12 et 18, y étant compris entre 17 et 72, h étant compris entre 0 et 12 et q étant compris entre 1 et 20 (y, h et q étant des nombres entiers).

2. Procédé de préparation selon la revendication 1 tel qu'on procède à la suite de ladite étape d) à une étape e) consistant à pratiquer l'autoclavage des particules issues de ladite étape d) puis on procède à une étape f) consistant à pratiquer le séchage desdites particules obtenues à l'issue de ladite e).

3. Procédé de préparation selon la revendication 2 tel que lesdits nanocristaux zéolithiques_comprennent au moins une zéolithe choisie parmi les zéolithes de type structural MFI, BEA, FAU et LTA et/ou lesdites entités protozéolithiques comprennent au moins une espèce pour l'amorce d'au moins une zéolithe choisie parmi les zéolithes de type structural MFI, BEA, FAU et LTA.

4. Procédé de préparation selon la revendication 1 tel que lesdites particules métalliques sont des hétéropolyanions présentant la formule P₂Mo₅O₂₃Hₕ^{(6-h)-}, avec h = 0, 1 ou 2.

5. Procédé de préparation selon l'une des revendications 1 à 4 tel que ladite étape a) consiste en la préparation d'une solution contenant des éléments précurseurs d'entités proto-zéolithiques à base de silicium et d'aluminium.

6. Procédé de préparation selon l'une des revendications 1 à 5 tel que lesdites particules métalliques sont préparées par la mise en solution, préalablement à ladite étape b), du(es) précurseur(s) métallique(s) nécessaire(s) à leur obtention, dans un solvant, ladite solution étant ensuite introduite dans le mélange selon ladite étape b).

7. Procédé de préparation selon l'une des revendications 1 à 6 tel qu'au moins un composé soufré est introduit dans le mélange selon ladite étape b) ou au cours de la mise en oeuvre de ladite étape g).

## Patentansprüche

1. Verfahren zur Herstellung eines anorganischen Stoffes mit hierarchischer Porosität in den Bereichen der Mikroporosität und der Mesoporosität, wobei der Stoff von mindestens zwei elementaren sphärischen Partikeln mit einem maximalen Durchmesser von 200 Mikrometer gebildet ist, wobei jedes der sphärischen Partikel Metallpartikel umfasst, die eine durchschnittliche Größe größer oder gleich 0,6 nm und unbedingt kleiner als 1 nm aufweisen, umfassend mindestens eines oder mehrere Metalle, ausgewählt unter Vanadium, Niobium, Tantal, Molybdän, Wolfram, Eisen, Kupfer, Zink, Kobalt und Nickel, wobei die Metallpartikel homogen und einheitlich in einer Matrix mit Mesostruktur auf Basis von Siliziumoxid eingeschlossen sind, die mikroporöse Wände mit einer Dicke zwischen 1 und 60 nm aufweist, wobei die Matrix entweder zur Gänze von protozeolithischen Einheiten oder zur Gänze von zeolithischen Einheiten oder einem Gemisch von protozeolithischen und zeolithischen Einheiten gebildet ist, wobei das Verfahren mindestens die folgenden Schritte umfasst:
a) Herstellen einer Lösung, umfassend zeolithische Nanokristalle mit einer maximalen nanometrischen Größe gleich 60 nm auf Basis von Silizium und/oder Vorläuferelemente von protozeolithischen Einheiten auf Basis von Silizium,
b) Mischen in Lösung der Metallpartikel oder mindestens eines metallischen Vorläufers der Metallpartikel, mindestens eines Tensids und mindestens der gemäß a) erhaltenen Lösung, so dass das Verhältnis der Volumina von anorganischen und organischen Stoffen V_{anorganisch}/V_{organisch} zwischen 0,29 und 0,50 beträgt,
c) Zerstäuben durch Aerosol der in Schritt b) erhaltenen Lösung, um zur Bildung von sphärischen Tröpfchen zu führen,
d) Trocknen der Partikel,
g) Beseitigen mindestens des Strukturmittels und mindestens des Tensids,
h) Regenerieren der Metallpartikel in Form von Polyoxometallat, die eventuell während des Schritts g) durch Waschen des aus dem Schritt g) stammenden Feststoffes mit einem polaren Lösungsmittel während einer Dauer von 1 bis 24 Stunden zersetzt wurden,
i) einen Trocknungsschritt, der bei einer Temperatur zwischen 40 und 100 °C während einer Dauer zwischen 12 und 48 Stunden durchgeführt wird,
wobei die Metallpartikel in Form von Polyoxometallat der Formel (XₓMₘO_{y}Hₕ)^{q-} vorhanden sind, wobei H das Wasserstoffatom ist, 0 das Sauerstoffatom ist, X ein Element ist, ausgewählt unter Phosphor, Silizium, Bor, Nickel und Kobalt, und M ein oder mehrere Elemente darstellt, ausgewählt unter Vanadium, Niobium, Tantal, Molybdän, Wolfram, Eisen, Kupfer, Zink, Kobalt und Nickel, wobei x gleich 0, 1, 2, oder 4 ist, wobei m gleich 5, 6, 7, 8, 9, 10, 11, 12 und 18 ist, wobei y zwischen 17 und 72 beträgt, wobei h zwischen 0 und 12 beträgt, und wobei q zwischen 1 und 20 beträgt (wobei y, h und q ganze Zahlen sind).

2. Herstellungsverfahren nach Anspruch1, bei dem nach dem Schritt d) ein Schritt e) ausgeführt wird, darin bestehend, das Autoklavieren der aus dem Schritt d) stammenden Partikel durchzuführen, dann ein Schritt f) ausgeführt wird, darin bestehend, das Trocknen der nach dem Schritt e) erhaltenen Partikel durchzuführen.

3. Herstellungsverfahren nach Anspruch 2, bei dem die zeolithischen Nanokristalle mindestens einen Zeolith des Strukturtyps MFI, BEA, FAU und LTA umfassen, und/oder die protozeolithischen Einheiten mindestens eine Spezies als Primer mindestens eines Zeoliths, ausgewählt unter den Zeolithen des Strukturtyps MFI, BEA, FAU und LTA, umfassen.

4. Herstellungsverfahren nach Anspruch 1, bei dem die Metallpartikel Heteropolyanionen sind, die die Formel P₂Mo₅O₂₃Hₕ^{(6-h)-} aufweisen, mit h = 0, 1 oder 2.

5. Herstellungsverfahren nach einem der Ansprüche 1 bis 4, bei dem der Schritt a) in der Herstellung einer Lösung, umfassend Vorläuferelemente von protozeolithischen Einheiten auf Basis von Silizium oder Aluminium, besteht.

6. Herstellungsverfahren nach einem der Ansprüche 1 bis 5, bei dem die Metallpartikel hergestellt werden, wobei vor dem Schritt b) der(die) für ihren Erhalt notwendige(n) metallische(n) Vorläufer in einem Lösungsmittel zur Lösung gebracht wird(werden), wobei die Lösung sodann in das Gemisch gemäß Schritt b) eingeleitet wird.

7. Herstellungsverfahren nach einem der Ansprüche 1 bis 6, bei dem mindestens eine schwefelhaltige Verbindung in das Gemisch gemäß Schritt b) oder während des Einsatzes des Schritts g) eingeleitet wird.

## Claims

1. A process for the preparation of an inorganic material with a hierarchical porosity in the micropore and mesopore domains, said material being constituted by at least two elementary spherical particles having a maximum diameter of 200 microns, each of said spherical particles comprising metallic particles that have a mean size greater than or equal to 0.6 nm and strictly less than 1 nm, and contain at least one or more metals selected from vanadium, niobium, tantalum, molybdenum, tungsten, iron, copper, zinc, cobalt and nickel, said metallic particles being trapped within a matrix in a homogeneous and uniform manner , wherein said matrix is mesostructured, based on silicon oxide, having microporous walls with a thickness in the range 1 to 60 nm, wherein said matrix is constituted either wholly by proto-zeolitic entities, or wholly by zeolitic entities or by a mixture of proto-zeolitic entities and zeolitic entities, said process comprising at least the following steps:
a) preparing a solution containing zeolitic nanocrystals with a maximum nanometric dimension equal to 60 nm based on silicon and/or precursor elements of proto-zeolitic entities based on silicon;
b) mixing, in solution, said metallic particles or at least one metallic precursor of said metallic particles, at least one surfactant and at least said solution obtained in accordance with a) such that the ratio of the volumes of inorganic and organic materials, V_{inorganic}/V_{organic}, is in the range 0.29 to 0.50;
c) aerosol atomization of said solution obtained in step b) in order to result in the formation of spherical droplets;
d) drying said particles;
g) eliminating at least said template and at least said surfactant
h) eliminating at least said template and at least said surfactant regenerating said metallic particles in the form of a polyoxometallate which may have decomposed during step g) by washing the solid obtained from said step g) with a polar solvent for a period of 1 to 24 hours,
i) drying step i) that is carried out at a temperature in the range 40°C to 100°C for a period in the range 12 to 48 hours,
wherein said metallic particles are in the form of a polyoxometallate with formula (XₓMₘO_{y}Hₕ)^{q-}, where H is a hydrogen atom, O is an oxygen atom, X is an element selected from phosphorus, silicon, boron, nickel and cobalt and M is one or more elements selected from vanadium, niobium, tantalum, molybdenum, tungsten, iron, copper, zinc, cobalt and nickel, x being equal to 0, 1, 2, or 4, m being equal to 5, 6, 7, 8, 9, 10, 11, 12 or 18, y being in the range 17 to 72, h being in the range 0 to 12 and q being in the range 1 to 20 (y, h and q being integer numbers).

2. The preparation process according to claim 1, wherein following said step d), a step e) is carried out consisting of autoclaving the particles obtained from said step d) then carrying out a step f) consisting of drying said particles obtained at the end of said step e).

3. The preparation process according to claim 2, wherein said zeolitic nanocrystals comprise at least one zeolite selected from zeolites with structure type MFI, BEA, FAU and LTA and/or said proto-zeolitic entities comprise at least one species for initiating at least one zeolite selected from zeolites with structure type MFI, BEA, FAU and LTA.

4. The preparation process according to claim 1, wherein said metallic particles are heteropolyanions with formula P₂Mo₅O₂₃Hₕ^{(6-h)-}, where h = 0, 1 or 2.

5. The preparation process according to one of claims 1 to 4, wherein said step a) consists of preparing a solution containing precursor elements of proto-zeolitic entities based on silicon and aluminium.

6. The preparation process according to one of claims 1 to 5, wherein said metallic particles are prepared by dissolving, prior to said step b), the metallic precursor(s) necessary for obtaining them in a solvent, said solution then being introduced into the mixture in accordance with said step b).

7. The preparation process according to one of claims 1 to 6, wherein at least one sulphur-containing compound is introduced into the mixture in accordance with said step b) or when carrying out said step g).
